# EUROPÄISCHE PATENTSCHRIFT

(11) **EP 2 478 030 B1**
(45) Veröffentlichungstag und Bekanntmachung des Hinweises auf die Patenterteilung: **10.07.2013**
(21) Anmeldenummer: 10754523.8
(22) Anmeldetag: 20.09.2010
(51) Int. Cl.: C08G 59/50

(54) **VERWENDUNG EINES STEREOISOMERENGEMISCHES VON DIAMINOMETHYLCYCLOHEXAN ALS HÄRTER FÜR EPOXIDHARZE**
USE OF A STEREOISOMER MIXTURE OF DIAMINOMETHYLCYCLOHEXANE AS A HARDENER FOR EPOXY RESINS
UTILISATION D'UN MÉLANGE DE STÉRÉOISOMÈRES DE DIAMINOMÉTHYLCYCLOHEXANE EN TANT QUE DURCISSEUR POUR RÉSINES ÉPOXY

(30) Priorität: 18.09.2009 EP 09170694
(43) Veröffentlichungstag der Anmeldung: 25.07.2012
(73) Patentinhaber: BASF SE, 67056 Ludwigshafen (DE)
(72) Erfinder: PFEFFINGER, Joachim, 67071 Ludwigshafen (DE); MALKOWSKI, Daniela, 67346 Speyer (DE); GÖTTKE, Stephan, 49456 Bakum (DE)
(86) Internationale Anmeldenummer: PCT/EP2010/063794
(87) Internationale Veröffentlichungsnummer: WO 2011/033104

(56) Entgegenhaltungen:
- EP-A2- 0 443 344
- DE-A1- 2 132 547
- DE-A1- 19 624 485

## Beschreibung

Der Gegenstand der vorliegenden Erfindung betrifft eine Zusammensetzung, die mindestens 1 Epoxidharz und eine Mischung enthaltend die 7 Stereoisomeren des Diaminomethylcyclohexans in ganz speziellen Mengenverhältnissen zueinander, ein Verfahren zur Herstellung der Zusammensetzung, die Verwendung der Zusammensetzung zur Herstellung von gehärteten Epoxiden, Klebstoffen, Verbundwerkstoffen und Formkörpern, eine Mischung enthaltend die 7 Stereoisomeren des Diaminomethylcyclohexans in den speziellen Mengenverhältnissen sowie die Verwendung dieser Mischung zur Herstellung der Zusammensetzung.

Es ist hinreichend bekannt und umfangreich beschrieben, dass Epoxidharze auf verschiedene Arten ausgehärtet werden können.

Heutzutage finden gehärtete Epoxidharze ihre Anwendung im Bereich der Coatings, Bodenbeschichtungen, Verbundwerkstoffe wie CFK und GFK (Kohlenstofffaserverstärkter Kunststoff (CFK - C für Carbon, GFK = Glas) bezeichnet einen Faser-Kunststoff-Verbundwerkstoff, bei dem Kohlenstoff- oder Glasfasern, meist in mehreren Lagen, als Verstärkung in eine Kunststoffmatrix eingebettet werden) sowie Klebstoffen. Eine besondere Bedeutung kommt in jüngster Zeit der Verwendung von Epoxidharzen zur Herstellung von großflächigen glasfaserverstärkten Verbundwerkstoffen zu, da diese häufig als Material für Rotorblätter im Windkraftanlagenbau eingesetzt werden. Durch die enorme Größe der Bauteile muss eine problemlose Injektion gewährleistet werden. Das bedeutet für die Epoxidharzsysteme eine längere offene Zeit (pot-life) in der die Viskosität des Systems noch niedrig ist und keine Gelierung eintritt. Sind die Systeme zu reaktiv, dann kann die große Form nicht vollständig befüllt werden. Andererseits muss das Harz/Härtergemisch aber nach dem Formfüllgang innerhalb weniger Stunden auch bei Temperaturen < 120°C vollständig aushärten und zu ausreichend stabilen Materialeigenschaften führen, da die Blätter später enormen Belastungen standhalten müssen.

EP-B 0 443 344 und dort zitierte Anmeldungen beschreiben umfangreich den derzeitigen Stand der Technik zur Härtung von verschiedenen Epoxidharzen mit marktüblichen Härten. Eine wichtige Rolle kommt dabei den sogenannten aminischen Härten zu, da diese in unterschiedlichen chemischen Strukturen eingesetzt werden.

Unter anderem wird in EP-B 0 443 344 der Einsatz von Diaminomethylcyclohexan als Härter von Epoxidharzsystemen beschrieben. Hierbei wird der Einfluss der Regioisomerenverteilung auf die Härtungsgeschwindigkeit von Epoxidharzen offenbart. Ein Hinweis darauf, dass bestimmte Mengenverhältnisse der sieben Stereoisomeren des Diaminomethylcyclohexans als Mischung einen Einfluss auf das Aushärteverhalten einer Zusammensetzung enthaltend ein Epoxidharz und die Mischung hat, wird nicht beschrieben.

Grundsätzlich werden aminische Härter nach ihrer chemischen Struktur in aliphatische, cycloaliphatische oder aromatische Typen eingeteilt. Zusätzlich ist eine Klassifizierung anhand des Substitutionsgrads der Aminogruppe möglich, die entweder primär, sekundär oder auch tertiär sein kann. Für die tertiären Amine wird allerdings ein katalytischer Härtungsmechanismus von Epoxidharzen postuliert, wohingegen für die sekundären und primären Amine jeweils stöchiometrische Härtungsreaktionen zum Aufbau des Polymernetzwerks zugrunde gelegt werden.

Im Allgemeinen ist gezeigt worden, dass innerhalb der primären Amin-Härter die aliphatischen Amine die höchste Reaktivität in der Epoxidhärtung zeigen. Etwas langsamer reagieren üblicherweise die cycloaliphatischen Amine, wohingegen die aromatischen Amine mit Abstand die geringste Reaktivität aufzeigen.

Des Weiteren reagieren primäre Amine deutlich schneller als entsprechende sekundäre Amine der gleichen Strukturklasse. Ebenfalls spielt es eine Rolle, ob die Aminogruppe an einem primären oder sekundären Kohlenstoffatom substituiert ist.

Diese bekannten Reaktivitätsunterschiede werden bei der Aushärtung von Epoxidharzen genutzt, um die Verarbeitungszeit und die mechanischen Eigenschaften der ausgehärteten Epoxidharze bedarfsgerecht einstellen zu können.

Für schnellaushärtende Systeme mit Härtungszeiten von ≤ 10 min wie z.B. Klebstoffe werden häufig kurzkettige aliphatische Amine eingesetzt, wohingegen bei der Herstellung von großflächigen Verbundwerkstoffen eine längere offene Zeit (pot life) gefordert ist, um die Form gleichmäßig füllen zu können. Hier kommen vorwiegend cycloaliphatische Amine wie zum Beispiel Isophorondiamin (IPDA) zum Einsatz.

Härtet das System aus Epoxidharz und Härter bzw. Härtermischung zu schnell aus, dann wird die Sprödigkeit des erhaltenen Duromers zu hoch. Es müssen dann weitere Additive zur Zähmodifizierung zugegeben werden, was die Anwendungen deutlich komplexer und kostenintensiver macht. Zusätzlich darf die Zusammensetzung enthaltend Epoxidharz- und Härtersystem nicht schon während des Eintragens in die Form oder dem Auftragen auf ein Substrat härten, da es zu Spannungen im Polymernetzwerk führen kann, die die Dauerbeständigkeit deutlich herabsetzen.

Die problemlose Verarbeitung durch bedarfsgerechtes Einstellen der Reaktivität des Härters hat große Bedeutung in der derzeitigen Herstellung von Coatings, Bodenbeschichtungen, Formkörpern, (faservertärkten) Verbundwerkstoffen und Klebstoffen.

Üblicherweise wir dieses Problem durch geschickte Kombination der unterschiedlichen aminischen Härter gelöst. Häufig gibt es aber bei der Mischung Probleme aufgrund von Unverträglichkeiten und Viskositätsunterschieden oder zu großen Reaktivitätsunterschieden. Das führt dazu, dass die eine aminische Härterkomponente verträglicher mit Epoxidharz ist als die andere Aminkomponente. Daher findet kein gleichzeitiges Abreagieren der Härterkomponenten statt, sondern eine unregelmäßige Aushärtung mit schlechten Materialeigenschaften oder Oberflächeneigenschaften resultiert.

Die Verträglichkeit von aminischen Härtern miteinander ist daher am besten, wenn die chemischen Grundkörper möglichst ähnlich sind. Beispielsweise können reaktionsträge aromatische Amine untereinander sehr gut kombiniert werden. Diese Mischungen zeigen auch über einen weiten Temperaturbereich und einen langen Zeitraum gute Lagerstabilitäten. Bei der Kombination von reaktiven aliphatischen Aminen mit mehrkernigen aromatischen Aminen können schnell Phasenseparationen auftreten, die zu inhomogenen Mischungen und damit zu ungleichmäßigen Aushärtungen führen.

Es ist bekannt, dass auch Amine derselben Gruppe (aromatisch, cycloaliphatisch, aliphatisch) durch Variation des Substitutionsmusters in ihrer Reaktivität eingestellt werden können.

Wie in EP 0443 344 gezeigt wurde, kann durch die unterschiedlichen Regioisomeren ein Reaktivitätsunterschied erzielt werden. EP-B 0443 344 beschreibt jedoch nicht, dass auch die Stereoisomerenverteilung erheblichen Einfluss auf das Aushärteverhalten bei Epoxidharzen zeigt.

Die Aufgabe der vorliegenden Erfindung ist es daher eine Zusammensetzung bereit zu stellen, die es ermöglicht, ihr Aushärteverhalten bedarfsgerecht an die Aushärtebedingungen der herzustellenden Endprodukte anzupassen.

Diese Aufgabe wird gelöst durch eine Zusammensetzung enthaltend
a) mindestens ein Epoxidharz und
b) eine Mischung enthaltend die 7 Isomeren des 2,4- und 2,6-Diamino-1-methylcyclohexans im Verhältnis von 75 bis 95 Gew.-%2,4- zu 5 bis 25 Gew.-% 2,6-Diamino-1-methylcyclohexans, dadurch gekennzeichnet, dass die GC- Flächenprozente der 7 Isomeren, nach aufsteigenden Retentionszeiten geordnet, gaschromatographisch mit einer 30 m langen, einen Innendurchmesser von 0,25 mm und einer Filmdicke von 0,5 µm enthaltenden Säule, die als bewegliche Phase mit Helium betrieben wird und als stationäre Phase 35 Gew.-% Diphenyl und 65 Gew.-% Dimethylpolysiloxan enthält, bei Temperaturen im Bereich von 100 bis 250°C während der gesamten Messung betrieben wird und ein Flammenionisationsdetektor eingesetzt wird, der bei 280°C betrieben wird, wobei die 7 Isomeren enthaltende Mischung nach Destillation in Tetrahydrofuran gelöst wird, die Lösung in den Gaschromatographen mit einer Einspritztemperatur von 100°C, einem Eingangsdruck von 1 bar eingespritzt wird und eine Heizrate von 1 °C/min bis eine Temperatur von 120°C erreicht ist, eingestellt wird, danach die Heizrate auf 5°C/min umgestellt und bis zur Endtemperatur von 250°C aufrechterhalten wird, anschließend die Temperatur von 250°C für 10 min gehalten wird und über die gesamte Messung die Geschwindigkeit des mit der Mischung angereichertem Heliums von 40 ml/min eingestellt ist und die Messung mit einem Split ratio von 1 zu 40 betrieben wird, ermittelt werden und
   für Peak 1 im Bereich von 4,0 bis 49,0 %,
   für Peak 2 im Bereich von 0,3 bis 9,0 %,
   für Peak 3 im Bereich von 9,0 bis 19,0%
   für Peak 4 im Bereich von 11,0 bis 30,0 %,
   für Peak 5 im Bereich von 3,0 bis 10,0 %
   für Peak 6 im Bereich von 8,0 bis 40,0 % und
   für Peak 7 im Bereich von 1,0 bis 10,0 % liegen, wobei die Summe der GC-Flächenprozente bezogen auf die eingesetzte Menge an 2,4- und 2,6 Diaminomethylcyclohexan 100% ergibt und
   eine Mischung, enthaltend die 7 Isomeren des 2,4- und 2,6-Diamino-1-methylcyclohexans im Verhältnis von 75 bis 95 Gew.-%2,4- zu 5 bis 25 Gew.-% 2,6-Diamino-1-methylcyclohexans, deren GC-Flächenprozente nach aufsteigenden Retentionszeiten geordnet, bestimmt nach dem gleichen gaschromatographischem Verfahren,
   für Peak 1 im Bereich von 15,6 bis16,6%,
   für Peak 2 im Bereich von 0,1 bis 0,4%,
   für Peak 3 im Bereich von 32,2 bis 33,2%
   für Peak 4 im Bereich von 23,5 bis 24,5%
   für Peak 5 im Bereich von 4,1 bis 5,1 %
   für Peak 6 im Bereich von 18,1 bis 19,1% und
   für Peak 7 im Bereich von 2,6 bis 3,6% liegen, wobei die Summe der GC-Flächenprozente der Peaks 1 bis 7 bezogen auf die eingesetzte Menge an 2,4- und 2,6 Diaminomethylcyclohexan 100% ergibt, ausgenommen ist.

Vorteilhaft ist die erfindungsgemäße Zusammensetzung, dadurch gekennzeichnet, dass die 7 Isomeren des 2,4- und 2,6-Diamino-1-methylcyclohexans erhältlich sind durch Hydrierung eines Gemisches enthaltend 75 bis 85 Gew.-% 2,4-Toluoldiamin und 15 bis 25 Gew.-% 2,6-Toluoldiamin

Vorteilhaft ist die erfindungsgemäße Zusammensetzung, dadurch gekennzeichnet, dass die Hydrierung mit Hilfe eines Ruthenium enthaltenden Katalysators durchgeführt wird.

Vorteilhaft ist die erfindungsgemäße Zusammensetzung, dadurch gekennzeichnet, dass die Hydrierung in Lösung oder Schmelze bei Temperaturen im Bereich von ≥ 210°C durchgeführt wurde und die GC-Flächenprozente
für Peak 1 im Bereich von 33,5 bis 49,0%
für Peak 2 im Bereich von 3,4 bis 9,0%
für Peak 3 im Bereich von 14,1 bis 19,0%
für Peak 4 im Bereich von 11,0 bis 22,7%
für Peak 5 im Bereich von 5,1 bis 7,7%
für Peak 6 im Bereich von 8,0 bis 15,7%
für Peak 7 im Bereich von 1,0 bis 5,4%
liegen, wobei die Summe der GC-Flächenprozente der Peaks 1 bis 7 bezogen auf eingesetzte Menge an 2,4 und 2,6-Diamino-1-methylcyclohexan 100% ergibt.

Vorteilhaft ist die erfindungsgemäße Zusammensetzung, dadurch gekennzeichnet, dass die Hydrierung in Lösung bei Temperaturen im Bereich von 210 bis 239°C durchgeführt wurde und die GC-Flächenprozente
für Peak 1 im Bereich von 33,5 bis 45,9%
für Peak 2 im Bereich von 3,4 bis 5,6%
für Peak 3 im Bereich von 14,1 bis 16,1%
für Peak 4 im Bereich von 16,9 bis 22,7%
für Peak 5 im Bereich von 6,6 bis 7,7%
für Peak 6 im Bereich von 12,1 bis 15,7%
für Peak 7 im Bereich von 2,5 bis 5,4%
liegen, wobei die Summe der GC-Flächenprozente der Peaks 1 bis 7 bezogen auf eingesetzte Menge an 2,4 und 2,6-Diamino-1-methylcyclohexan 100% ergibt.

Vorteilhaft ist die erfindungsgemäße Zusammensetzung, dadurch gekennzeichnet, dass die Hydrierung in der Schmelze bei Temperaturen im Bereich von 210 bis 239°C durchgeführt wurde und die GC-Flächenprozente
für Peak 1 im Bereich von 38,5 bis 46,0%
für Peak 2 im Bereich von 4,7 bis 8,7%
für Peak 3 im Bereich von 14,8 bis 19,0%
für Peak 4 im Bereich von 12,1 bis 17,9%
für Peak 5 im Bereich von 5,5 bis 7,1 %
für Peak 6 im Bereich von 8,7 bis 13,2%
für Peak 7 im Bereich von 1,4 bis 3,2%
liegen, wobei die Summe der GC-Flächenprozente der Peaks 1 bis 7 bezogen auf eingesetzte Menge an 2,4 und 2,6-Diamino-1-methylcyclohexan 100% ergibt.

Vorteilhaft ist die erfindungsgemäße Zusammensetzung, dadurch gekennzeichnet, dass die Hydrierung in der Schmelze bei Temperaturen ≥ 240°C durchgeführt wird und die GC-Flächenprozente
für Peak 1 im Bereich von 46,0 bis 49,0%
für Peak 2 im Bereich von 5,7 bis 9,0%
für Peak 3 im Bereich von 16,2 bis 19,0%
für Peak 4 im Bereich von 11,0 bis 16,8%
für Peak 5 im Bereich von 5,1 bis 6,5%
für Peak 6 im Bereich von 8,0 bis 12,0%
für Peak 7 im Bereich von 1,0 bis 2,4%
liegen, wobei die Summe der GC-Flächenprozente der Peaks 1 bis 7 bezogen auf eingesetzte Menge an 2,4 und 2,6-Diamino-1-methylcyclohexan 100% ergibt.

Vorteilhaft ist die erfindungsgemäße Zusammensetzung, dadurch gekennzeichnet, dass die Hydrierung in Lösung bei Temperaturen im Bereich von 170 bis 209°C durchgeführt wird und die GC-Flächenprozente
für Peak 1 im Bereich von 22,4 bis 33,4%
für Peak 2 im Bereich von 1,7 bis 3,3%
für Peak 3 im Bereich von 12,9 bis 14,0%
für Peak 4 im Bereich von 22,8 bis 25,0%
für Peak 5 im Bereich von 6,6 bis 7,7%
für Peak 6 im Bereich von 15,8 bis 26,3%
für Peak 7 im Bereich von 2,5 bis 5,4%
liegen, wobei die Summe der GC-Flächenprozente der Peaks 1 bis 7 bezogen auf eingesetzte Menge an 2,4 und 2,6-Diamino-1-methylcyclohexan 100% ergibt.

Vorteilhaft ist die erfindungsgemäße Zusammensetzung, dadurch gekennzeichnet, dass die Hydrierung in Lösung bei Temperaturen im Bereich von 150 bis 169°C durchgeführt wird und die GC-Flächenprozente
für Peak 1 im Bereich von 8,0 bis 22,3%
für Peak 2 im Bereich von 0,3 bis 1,6%
für Peak 3 im Bereich von 11,5 bis 12,8%
für Peak 4 im Bereich von 27,9 bis 30,0%
für Peak 5 im Bereich von 3,0 bis 5,0%
für Peak 6 im Bereich von 26,4 bis 36,8%
für Peak 7 im Bereich von 5,5 bis 8,4%
liegen, wobei die Summe der GC-Flächenprozente der Peaks 1 bis 7 bezogen auf eingesetzte Menge an 2,4 und 2,6-Diamino-1-methylcyclohexan 100% ergibt.

Vorteilhaft ist die erfindungsgemäße Zusammensetzung, dadurch gekennzeichnet, dass die Hydrierung in Lösung bei Temperaturen im Bereich von 130 bis 149°C durchgeführt wird und die GC-Flächenprozente
für Peak 1 im Bereich von 4,0 bis 7,9%
für Peak 2 im Bereich von 0,3 bis 1,6%
für Peak 3 im Bereich von 9,0 bis 11,4%
für Peak 4 im Bereich von 25,1 bis 27,8%
für Peak 5 im Bereich von 7,8 bis 10,0%
für Peak 6 im Bereich von 36,9 bis 40,0%
für Peak 7 im Bereich von 8,5 bis 10,0%
liegen, wobei die Summe der GC-Flächenprozente der Peaks 1 bis 7 bezogen auf eingesetzte Menge an 2,4 und 2,6-Diamino-1-methylcyclohexan 100% ergibt.

Vorteilhaft ist die erfindungsgemäße Zusammensetzung, dadurch gekennzeichnet, dass die Hydrierung am Festbettkatalysator bei einer maximalen Temperatur von 155 bis 175 °C durchgeführt wird und die GC-Flächenprozente
für Peak 1 im Bereich von 21,0 bis 25,0%
für Peak 2 im Bereich von 1,0 bis 3,0%
für Peak 3 im Bereich von 11,0 bis 16,0%
für Peak 4 im Bereich von 23,0 bis 29,0%
für Peak 5 im Bereich von 5,0 bis 8,5%
für Peak 6 im Bereich von 20,0 bis 25,0%
für Peak 7 im Bereich von 4,0 bis 7,0%
liegen, wobei die Summe der GC-Flächenprozente der Peaks 1 bis 7 bezogen auf eingesetzte Menge an 2,4 und 2,6-Diamino-1-methylcyclohexan 100% ergibt.

Vorteilhaft ist die erfindungsgemäße Zusammensetzung, dadurch gekennzeichnet, dass die Hydrierung mit Hilfe eines Ruthenium enthaltenden Katalysators durchgeführt wird.

Vorteilhaft ist die erfindungsgemäße Zusammensetzung, dadurch gekennzeichnet, dass die Hydrierung in Lösung oder Schmelze bei mittleren Temperaturen im Bereich von ≥ 210 °C durchgeführt wurde und die GC-Flächenprozente für Peak 1 im Bereich von 33,5 bis 49,0%
für Peak 2 im Bereich von 3,4 bis 9,0%
für Peak 3 im Bereich von 14,1 bis 19,0%
für Peak 4 im Bereich von 11,0 bis 22,7%
für Peak 5 im Bereich von 5,1 bis 7,7%
für Peak 6 im Bereich von 8,0 bis 15,7%
für Peak 7 im Bereich von 1,0 bis 5,4%
liegen, wobei die Summe der GC-Flächenprozente der Peaks 1 bis 7 bezogen auf eingesetzte Menge an 2,4 und 2,6-Diamino-1-methylcyclohexan 100% ergibt.

Vorteilhaft ist die erfindungsgemäße Zusammensetzung, dadurch gekennzeichnet, dass die Hydrierung in Lösung bei mittleren Temperaturen im Bereich von 210 bis 239°C durchgeführt wurde und die GC-Flächenprozente
für Peak 1 im Bereich von 33,5 bis 45,9%
für Peak 2 im Bereich von 3,4 bis 5,6%
für Peak 3 im Bereich von 14,1 bis 16,1 %
für Peak 4 im Bereich von 16,9 bis 22,7%
für Peak 5 im Bereich von 6,6 bis 7,7%
für Peak 6 im Bereich von 12,1 bis 15,7%
für Peak 7 im Bereich von 2,5 bis 5,4%
liegen, wobei die Summe der GC-Flächenprozente der Peaks 1 bis 7 bezogen auf eingesetzte Menge an 2,4 und 2,6-Diamino-1-methylcyclohexan 100% ergibt.

Vorteilhaft ist die erfindungsgemäße Zusammensetzung, dadurch gekennzeichnet, dass die Hydrierung in der Schmelze bei mittleren Temperaturen im Bereich von 210 bis 239°C durchgeführt wurde und die GC-Flächenprozente
für Peak 1 im Bereich von 38,5 bis 46,0%
für Peak 2 im Bereich von 4,7 bis 8,7%
für Peak 3 im Bereich von 14,8 bis 19,0%
für Peak 4 im Bereich von 12,1 bis 17,9%
für Peak 5 im Bereich von 5,5 bis 7,1 %
für Peak 6 im Bereich von 8,7 bis 13,2%
für Peak 7 im Bereich von 1,4 bis 3,2%
liegen, wobei die Summe der GC-Flächenprozente der Peaks 1 bis 7 bezogen auf eingesetzte Menge an 2,4 und 2,6-Diamino-1-methylcyclohexan 100% ergibt.

Vorteilhaft ist die erfindungsgemäße Zusammensetzung, dadurch gekennzeichnet, dass die Hydrierung in der Schmelze bei mittleren Temperaturen ≥ 240°C durchgeführt wird und die GC-Flächenprozente
für Peak 1 im Bereich von 46,0 bis 49,0%
für Peak 2 im Bereich von 5,7 bis 9,0%
für Peak 3 im Bereich von 16,2 bis 19,0%
für Peak 4 im Bereich von 11,0 bis 16,8%
für Peak 5 im Bereich von 5,1 bis 6,5%
für Peak 6 im Bereich von 8,0 bis 12,0%
für Peak 7 im Bereich von 1,0 bis 2,4%
liegen, wobei die Summe der GC-Flächenprozente der Peaks 1 bis 7 bezogen auf eingesetzte Menge an 2,4 und 2,6-Diamino-1-methylcyclohexan 100% ergibt.

Vorteilhaft ist die erfindungsgemäße Zusammensetzung, dadurch gekennzeichnet, dass die Hydrierung in Lösung bei mittleren Temperaturen im Bereich von 170 bis 209°C durchgeführt wird und die GC-Flächenprozente
für Peak 1 im Bereich von 22,4 bis 33,4%
für Peak 2 im Bereich von 1,7 bis 3,3%
für Peak 3 im Bereich von 12,9 bis 14,0%
für Peak 4 im Bereich von 22,8 bis 25,0%
für Peak 5 im Bereich von 6,6 bis 7,7%
für Peak 6 im Bereich von 15,8 bis 26,3%
für Peak 7 im Bereich von 2,5 bis 5,4%
liegen, wobei die Summe der GC-Flächenprozente der Peaks 1 bis 7 bezogen auf eingesetzte Menge an 2,4 und 2,6-Diamino-1-methylcyclohexan 100% ergibt.

Vorteilhaft ist die erfindungsgemäße Zusammensetzung, dadurch gekennzeichnet, dass die Hydrierung in Lösung bei mittleren Temperaturen im Bereich von 150 bis 169°C durchgeführt wird und die GC-Flächenprozente
für Peak 1 im Bereich von 8,0 bis 22,3%
für Peak 2 im Bereich von 0,3 bis 1,6%
für Peak 3 im Bereich von 11,5 bis 12,8%
für Peak 4 im Bereich von 27,9 bis 30,0%
für Peak 5 im Bereich von 3,0 bis 5,0%
für Peak 6 im Bereich von 26,4 bis 36,8%
für Peak 7 im Bereich von 5,5 bis 8,4%
liegen, wobei die Summe der GC-Flächenprozente der Peaks 1 bis 7 bezogen auf eingesetzte Menge an 2,4 und 2,6-Diamino-1-methylcyclohexan 100% ergibt.

Vorteilhaft ist die erfindungsgemäße Zusammensetzung, dadurch gekennzeichnet, dass die Hydrierung in Lösung bei mittleren Temperaturen im Bereich von 130 bis 149°C durchgeführt wird und die GC-Flächenprozente
für Peak 1 im Bereich von 4,0 bis 7,9%
für Peak 2 im Bereich von 0,3 bis 1,6%
für Peak 3 im Bereich von 9,0 bis 11,4%
für Peak 4 im Bereich von 25,1 bis 27,8%
für Peak 5 im Bereich von 7,8 bis 10,0%
für Peak 6 im Bereich von 36,9 bis 40,0%
für Peak 7 im Bereich von 8,5 bis 10,0%
liegen, wobei die Summe der GC-Flächenprozente der Peaks 1 bis 7 bezogen auf eingesetzte Menge an 2,4 und 2,6-Diamino-1-methylcyclohexan 100% ergibt.

Die "mittlere Temperatur" ist definiert durch das arithmetische Mittel der Reaktoreingangstemperatur und der Reaktorausgangstemperatur. Vorzugsweise unterscheiden sich die Eingangs- und die Ausgangstemperatur um nicht mehr als 10°C.

Vorteilhaft ist die erfindungsgemäße Zusammensetzung, dadurch gekennzeichnet, dass die Hydrierung batchweise durchgeführt wurde.

Vorteilhaft ist die erfindungsgemäße Zusammensetzung, dadurch gekennzeichnet, dass die Hydrierung kontinuierlich durchgeführt wurde.

Vorteilhaft ist die erfindungsgemäße Zusammensetzung, dadurch gekennzeichnet, dass das Epoxidharz ausgewählt ist aus der Gruppe von Glycidpolyether, Glycidpolyester und Glycidamine sind.

Vorteilhaft ist die erfindungsgemäße Zusammensetzung, wenn das stöchiometrische Verhältnis von Epoxidgruppen zu reaktivem Wassertoff an einer Amingruppe der erfindungsgemäßen Mischung im Bereich von 0,7 bis 1,2 liegt.

Ein weiterer Gegenstand der Erfindung ist ein Verfahren zur Herstellung der erfindungsgemäßen Zusammensetzung, dadurch gekennzeichnet, dass das Epoxidharz mit der Mischung bei Temperaturen im Bereich von 0°C bis 70°C vermischt wird.

Ein weiterer Gegenstand der Erfindung ist die Verwendung der erfindungsgemäßen Zusammensetzung zur Herstellung von gehärteten Epoxidharzen.

Ein weiterer Gegenstand der Erfindung ist die Verwendung der erfindungsgemäßen Zusammensetzung als Klebstoff.

Ein weiterer Gegenstand der Erfindung ist die Verwendung der erfindungsgemäßen Zusammensetzung zur Herstellung von Formkörpern.

Ein weiterer Gegenstand der Erfindung ist ein gehärtetes Epoxidharz erhältlich durch Aushärtung der Zusammensetzung.

Ein weiterer Gegenstand der Erfindung ist ein Klebstoff enthaltend die erfindungsgemäße Zusammensetzung.

Ein weiterer Gegenstand der Erfindung ist ein Formkörper erhältlich durch Aushärtung der erfindungsgemäßen Zusammensetzung in einer Form.

Ein weiterer Gegenstand der Erfindung ist eine Mischung enthaltend die 7 Isomeren des 2,4- und 2,6-Diamino-1-methylcyclohexans im Verhältnis von 75 bis 95 Gew.-% 2,4- zu 5 bis 25 Gew.-% 2,6-Diamino-1-methylcyclohexans, dadurch gekennzeichnet, dass die GC- Flächenprozente der 7 Isomeren, nach aufsteigenden Retentionszeiten geordnet, gaschromatographisch mit einer 30 m langen, einen Innendurchmesser von 0,25 mm und einer Filmdicke von 0,5 µm enthaltenden Säule, die als bewegliche Phase mit Helium betrieben wird und als stationäre Phase 35 Gew.-% Diphenyl und 65 Gew.-% Dimethylpolysiloxan enthält, bei Temperaturen im Bereich von 100 bis 250°C während der gesamten Messung betrieben wird und ein Flammenionisationsdetektor eingesetzt wird, der bei 280°C betrieben wird, wobei die 7 Isomeren enthaltende Mischung nach Destillation in Tetrahydrofuran gelöst wird, die Lösung in den Gaschromatographen mit einer Einspritztemperatur von 100°C, einem Eingangsdruck von 1 bar eingespritzt wird und eine Heizrate von 1 °C/min bis eine Temperatur von 120°C erreicht ist, eingestellt wird, danach die Heizrate auf 5°C/min umgestellt und bis zur Endtemperatur von 250°C aufrechterhalten wird, anschließend die Temperatur von 250°C für 10 min gehalten wird und über die gesamte Messung die Geschwindigkeit des mit der Mischung angereichertem Heliums von 40 ml/min eingestellt ist und die Messung mit einem Split ratio von 1 zu 40 betrieben wird, ermittelt werden und für Peak 1 im Bereich von 4,0 bis 49,0 %,
für Peak 2 im Bereich von 0,3 bis 9,0 %,
für Peak 3 im Bereich von 9,0 bis 19,0%
für Peak 4 im Bereich von 11,0 bis 30,0 %,
für Peak 5 im Bereich von 3,0 bis 10,0 %
für Peak 6 im Bereich von 8,0 bis 40,0 % und
für Peak 7 im Bereich von 1,0 bis 10,0 % liegen, wobei die Summe der GC-Flächenprozente bezogen auf die eingesetzte Menge an 2,4- und 2,6 Diamino-1-methylcyclohexan 100% ergibt und
eine Mischung, enthaltend die 7 Isomeren des 2,4- und 2,6-Diamino-1-methylcyclohexans im Verhältnis von 75 bis 95 Gew.-% 2,4- zu 5 bis 25 Gew.-% 2,6-Diamino-1-methylcyclohexans, deren GC-Flächenprozente nach aufsteigenden Retentionszeiten geordnet, bestimmt nach dem gleichen gaschromatographischem Verfahren,
für Peak 1 im Bereich von 15,6 bis16,6%,
für Peak 2 im Bereich von 0,1 bis 0,4%,
für Peak 3 im Bereich von 32,2 bis 33,2%
für Peak 4 im Bereich von 23,5 bis 24,5%
für Peak 5 im Bereich von 4,1 bis 5,1 %
für Peak 6 im Bereich von 18,1 bis 19,1% und
für Peak 7 im Bereich von 2,6 bis 3,6% liegen, wobei die Summe der GC-Flächenprozente der Peaks 1 bis 7 bezogen auf die eingesetzte Menge an 2,4- und 2,6-Diamino-1-methylcyclohexan 100% ergibt, ausgenommen ist.

Vorteilhaft ist die erfindungsgemäße Mischung, dadurch gekennzeichnet, dass die 7 Isomeren des 2,4- und 2,6-Diamino-1-methylcyclohexans erhältlich sind durch Hydrierung eines Gemisches enthaltend 75 bis 85 Gew.-% 2,4-Toluoldiamin und 15 bis 25 Gew.-% 2,6-Toluoldiamin mittels eines auf Aluminiumoxid geträgerten Ruthenium enthaltenden Katalysator bei Temperaturen bzw. bei mittleren Temperaturen im Bereich von 130 bis ≥ 240°C.

Ein weiterer Gegenstand der Erfindung ist die Verwendung der erfindungsgemäßen Mischung zur Herstellung der erfindungsgemäßen Zusammensetzung.

Die erfindungsgemäße Zusammensetzung enthält mindestens ein Epoxidharz sowie eine Mischung enthaltend die 7 Isomeren des 2,4- und 2,6-Diamino-1-methylcyclohexans im Verhältnis von 75 bis 95 Gew.-%2,4- zu 5 bis 25 Gew.-% 2,6-Diamino-1-methylcyclohexans.

Für die erfindungsgemäße Zusammensetzung sind dabei die Epoxidharze ausgewählt aus der Gruppe von Glycidpolyether, Glycidpolyester und Glycidamine. Die zu verwendenden Epoxidharze und/oder Epoxidharzmischungen enthalten dabei bevorzugt Epoxidharze ausgewählt aus der Gruppe von Bisphenol-A-bisglycidylether (DGEBA), Bisphenol-F-bisglycidylether, Bisphenol-S-bisglycidether (DGEBS), Tetraglycidylmethylendianiline (TGMDA), Epoxy-Novolaken (den Reaktionsprodukten aus Epichlorhydrin und Phenolharzen (Novolak)) und cycloaliphatischen Epoxidharzen wie 3,4-Epoxycyclohexylmethyl-3,4-epoxycyclohexancarboxylat und Hexahydrophthalsäurediglycidylester.

Des Weiteren können die Epoxidharze auch noch weitere Raktivverdünner enthalten. Diese sind ausgewählt aus der Gruppe von 1,4-Butandiolbisglycidylether, 1,6-Hexandiolbisglycidylether, Glycidylneodecanoat, Glycidylversatat, 2-Ethylhexylglycidylether, C₈-C₁₀- Alkylglycidylether, C₁₂-C₁₄ - Alkylglycidylether, p-tert-Butylglycidether, Butylglycidether, Nonylphenylglycidether, p-tert-Butylphenylglycid-ether, Phenylglycidether, o-Cresylglycidether, Polyoxypropylenglycoldiglycidether, Trimethylolpropantriglycidether (TMP), Glycerintriglycidether und Triglycidylparaaminophenol (TGPAP).

Die in der Zusammensetzung enthaltende Mischung aus 7 Isomeren des 2,4- und 2,6-Diamino-1-methylcyclohexans im Verhältnis von 75 bis 95 Gew.-% 2,4- zu 5 bis 25 Gew.-% 2,6-Diamino-1-methylcyclohexans wird durch Hydrierung von einem Gemisch von 75 bis 85 Gew.-% 2,4-Toluoldiamin (2,4-TDA) und 15 bis 25 Gew.-% 2,6-Toluoldiamin (2,6-TDA) erhalten. Bevorzugt ist ein Gemisch von 2,4- zu 2,6-TDA im Bereich von 77 bis 83 Gew.-% zu 17 bis 23 Gew.-%. Die Hydrierung dieses Gemisches von 2,4- und2,6-TDA zu der erfindungsgemäßen Mischung enthaltend 7 Isomeren des 2,4- und 2,6-Diamino-1-methylcyclohexans (MDACH) verläuft einstufig. Als Nebenprodukte treten vor allen Dingen Leichtsieder nach Desaminierung auf, die destillativ abgetrennt werden können, wie es in Schema 1 dargestellt ist. Ein Gemisch aus 2,4- und 2,6-Diamino-1-methylcyclohexan wird als MDACH bezeichnet.

### Schema 1:

### Hydrierung von 2,4-und 2,6-TDA zu MDACH und mögliche Nebenprodukte

### Reaktion:

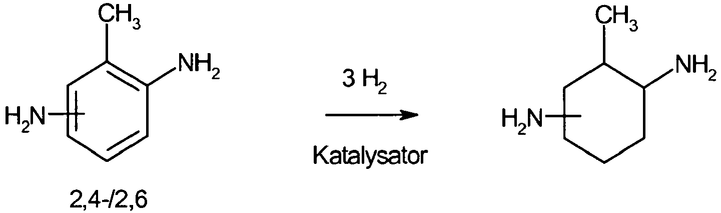

mögliche Nebenprodukte:
Leichtsieder:

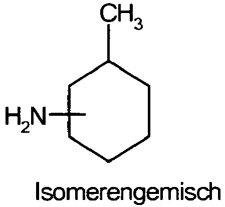

Dabei erhält man ein Gemisch folgender Isomeren:
2,4-Diamino-1-methylcyclohexan: 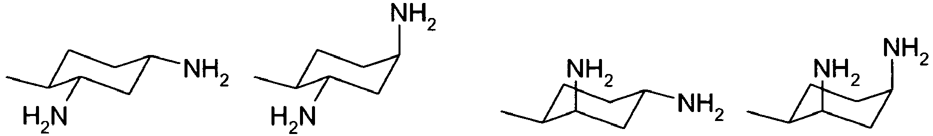 2,6-Diamino-1-methylcyclohexan:

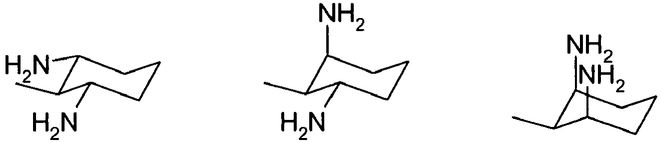

Das Gemisch dieser 7 Isomeren kann gaschromatographisch untersucht werden. Hierfür wird die erfindungsgemäße Mischung, die die 7 Isomeren des 2,4- und 2,6-Diamino-1-methylcyclohexans im Verhältnis von 75 bis 95 Gew.-% 2,4- zu 5 bis 25 Gew.-% 2,6-Diamino-1-methylcyclohexans enthält destillativ gereinigt. Für die Destillation kann jede dem Fachmann bekannte Destillationskolonne eingesetzt werden. Bevorzugt ist eine Füllkörperkolonne mit Maschendrahtnetzen. Besonders bevorzugt sind solche Füllkörperkolonnen, die eine theoretische Trennbödenzahl von mindestens 5 aufweisen. Bevorzugt wird die Destillation bei vermindertem Druck, besonders bevorzugt bei Drücken im Bereich von 5 bis 15 mbar durchgeführt. Wird die Destillation im Bereich von 5 bis 15 mbar durchgeführt erhält man das Isomerengemisch der 7 Isomeren des 2,4- und 2,6-Diamino-1-methylcyclohexans (MDACH) bei Temperaturen im Bereich von 75 bis 90 °C als Kopfprodukt. Das erhaltende Produkt, das mehr als 95 Gew.-% an MDACH enthält wird anschließend in THF gelöst. Diese Lösung wird mit Hilfe einer Spritze in den Gaschromatographen eingespritzt. Der Gaschromatograph ist mit einer 30 m langen Säule bestückt, die einen Innendurchmesser von 0,25 mm und einer Filmdicke von 0,5 µm aufweist. Die Säule selbst enthält als stationäre Phase 35 Gew.-% Diphenyl und 65 Gew.-% Dimethylpolysiloxan. Als bevorzugte Säulen, wird die Säule RTX35-Amin der Firma Resteck Corporation eingesetzt. Als Trägergas oder bewegliche Phase wird Helium verwendet. Die Geschwindigkeit des Heliums wird mit 40ml/min eingestellt, so dass man mit einem eingestellten Split ratio (Teilungsverhältnis) von 40:1 einen konstanten Fluss von 1 mL/min He über die Säule hat. Der Gaschromatograph weist zur Bestimmung der zu untersuchenden Substanzen einen Flammenionisationsdetektor auf, der bei 280°C betrieben wird. Die Säule im Gaschromatographen wird bei einer Temperatur im Bereich von 100 bis 250°C betrieben. Um die Flächenprozente der zu bestimmenden Peaks ermitteln zu können, wird der destillierten in THF gelösten, erfindungsgemäßen Mischung eine definierte Menge eines Standards hinzugefügt, mit dessen Flächenprozente die eigentlichen Flächenprozente der Peaks 1 bis 7 der 7 Isomeren des 2,4- und 2,6-Diamino-1-methylcyclohexans verglichen werden. Die destillierte und in THF gelöste und mit dem Standard versetzte, erfindungsgemäße Mischung wird mit einer Einspritztemperatur von 100°C und einen Eingangsdruck von 1 bar in die Säule gespritzt. Zuerst wird eine Heizrate von 1°C/min eingestellt, die so lange beibehalten wird bis eine Temperatur für die Säule von 120°C erreicht ist. Sobald diese Temperatur erreicht ist wird die Heizrate der Säule auf 5°C/min umgestellt und bis zur Endtemperatur von 250°C aufrechterhalten. Anschließend wird die Säulentemperatur für 10 min bei 250°C gehalten.

Nach dem so beschriebenem Verfahren ergeben sich für die Peaks 1 bis 7 der 7 Isomeren des 2,4- und 2,6-Diamino-1-methylcyclohexans, nach aufsteigenden Retentionszeiten geordnet, folgenden Retentionszeiten
für Peak 1 15,3 min,
für Peak 2 15,5 min,
für Peak 3 15,7 min,
für Peak 4 16,2 min,
für Peak 5 16,4 min,
für Peak 6 17,4 min,
für Peak 7 18,2 min, wobei die Abweichung der Retentionszeit bei ±3% liegt.

Je nachdem wie die Hydrierungsbedingungen gewählt werden, resultieren unterschiedliche prozentuale Anteil der 7 Isomeren des 2,4- und 2,6-Diamino-1-methylcyclohexans zueinander in der resultierenden erfindungsgemäßen Mischung. Diese führen bei der Verwendung der erfindungsgemäßen Mischung in der erfindungsgemäßen Zusammensetzung zu unterschiedlichem Aushärteverhalten.

Bevorzugt liegt der GC-Flächenanteil des Peaks 1 der 7 Isomeren des 2,4- und 2,6-Diamino-1-methylcyclohexans, gaschromatographisch nach der oben beschriebenen Methode bestimmt, bei Hydrierungstemperaturen im Bereich von 130 bis ≥ 240°C im Bereich von 4,0 bis 49,0%, bei Hydrierungstemperaturen im Bereich von 130 bis 149°C im Bereich von 4,0 bis 7,9%, bei Hydrierungstemperaturen im Bereich von 150 bis 169°C im Bereich von 8,0 bis 22,3%, bei Hydrierungstemperaturen im Bereich von 170 bis 209°C im Bereich von 22,4 bis 33,4%, bei Hydrierungstemperaturen im Bereich von 210 bis 239°C im Bereich von 33,5 bis 46,0% und bei Hydrierungstemperaturen im Bereich von ≥ 240°C im Bereich von 46,0 bis 49,0%, wobei ein Peak 1, der im Bereich von 15,6 bis16,6 GC-Flächenprozente aufweist und nach der obigen GC-Methode bestimmt wurde, ausgenommen ist.

Bevorzugt liegt der GC-Flächenanteil des Peaks 2 der 7 Isomeren des 2,4- und 2,6-Diamino-1-methylcyclohexans, gaschromatographisch nach der oben beschriebenen Methode bestimmt, bei Hydrierungstemperaturen im Bereich von 130 bis ≥ 240°C im Bereich von 0,3 bis 9,0%, bei Hydrierungstemperaturen im Bereich von 130 bis 169°C im Bereich von 0, bis 1,6%, bei Hydrierungstemperaturen im Bereich von 170 bis 209°C im Bereich von 1,7 bis 3,3%, bei Hydrierungstemperaturen im Bereich von 210 bis 239°C im Bereich von 3,4 bis 8,7% und bei Hydrierungstemperaturen im Bereich von ≥ 240°C im Bereich von 5,7 bis 9,0%, ein Peak 2, der im Bereich von 0,1 bis 0,4 GC-Flächenprozente aufweist und nach der obigen GC-Methode bestimmt wurde, ausgenommen ist.

Bevorzugt liegt der GC-Flächenanteil des Peaks 3 der 7 Isomeren des 2,4- und 2,6-Diamino-1-methylcyclohexans, gaschromatographisch nach der oben beschriebenen Methode bestimmt, bei Hydrierungstemperaturen im Bereich von 130 bis ≥ 240°C im Bereich von 9,0 bis 19,0%, bei Hydrierungstemperaturen im Bereich von 130 bis 149°C im Bereich von 9,0 bis 11,4%, bei Hydrierungstemperaturen im Bereich von 150 bis 169°C im Bereich von 11,5 bis 12,8%, bei Hydrierungstemperaturen im Bereich von 170 bis 209°C im Bereich von 12,9 bis 14,0%, bei Hydrierungstemperaturen im Bereich von 210 bis 239°C im Bereich von 14,1 bis 19,0% und bei Hydrierungstemperaturen im Bereich von ≥ 240°C im Bereich von 16,2 bis 19,0%, wobei ein Peak 3, der im Bereich von 32,2 bis 33,2 GC-Flächenprozente aufweist und nach der obigen GC-Methode bestimmt wurde, ausgenommen ist.

Bevorzugt liegt der GC-Flächenanteil des Peaks 4 der 7 Isomeren des 2,4- und 2,6-Diamino-1-methylcyclohexans, gaschromatographisch nach der oben beschriebenen Methode bestimmt, bei Hydrierungstemperaturen im Bereich von 130 bis ≥ 240°C im Bereich von 11,0 bis 30,0%, bei Hydrierungstemperaturen im Bereich von 130 bis 149°C im Bereich von 25,1 bis 27,8%, bei Hydrierungstemperaturen im Bereich von 150 bis 169°C im Bereich von 27,9 bis 30,0%, bei Hydrierungstemperaturen im Bereich von 170 bis 209°C im Bereich von 22,8 bis 25,0%, bei Hydrierungstemperaturen im Bereich von 210 bis 239°C im Bereich von 12,1 bis 22,7% und bei Hydrierungstemperaturen im Bereich von ≥ 240°C im Bereich von 11,0 bis 16,8%, wobei ein Peak 4, der im Bereich von 23,5 bis 24,5 GC-Flächenprozente aufweist und nach der obigen GC-Methode bestimmt wurde, ausgenommen ist.

Bevorzugt liegt der GC-Flächenanteil des Peaks 5 der 7 Isomeren des 2,4- und 2,6-Diamino-1-methylcyclohexans, gaschromatographisch nach der oben beschriebenen Methode bestimmt, bei Hydrierungstemperaturen im Bereich von 130 bis ≥ 240°C im Bereich von 3,0 bis 10,0%, bei Hydrierungstemperaturen im Bereich von 130 bis 149°C im Bereich von 7,8 bis 10,0%, bei Hydrierungstemperaturen im Bereich von 150 bis 169°C im Bereich von 3,0 bis 5,0%, bei Hydrierungstemperaturen im Bereich von 170 bis 239°C im Bereich von 5,5 bis 7,7% und bei Hydrierungstemperaturen im Bereich von ≥ 240°C im Bereich von 5,1 bis 6,5%, wobei ein Peak 5, der im Bereich von 4,1 bis 5,1 GC-Flächenprozente aufweist und nach der obigen GC-Methode bestimmt wurde, ausgenommen ist.

Bevorzugt liegt der GC-Flächenanteil des Peaks 6 der 7 Isomeren des 2,4- und 2,6-Diamino-1-methylcyclohexans, gaschromatographisch nach der oben beschriebenen Methode bestimmt, bei Hydrierungstemperaturen im Bereich von 130 bis ≥ 240°C im Bereich von 8,0 bis 40,0%, bei Hydrierungstemperaturen im Bereich von 130 bis 149°C im Bereich von 36,9 bis 40,0%, bei Hydrierungstemperaturen im Bereich von 150 bis 169°C im Bereich von 26,4 bis 36,8%, bei Hydrierungstemperaturen im Bereich von 170 bis 209°C im Bereich von 15,8 bis 26,3%, bei Hydrierungstemperaturen im Bereich von 210 bis 239°C im Bereich von 8,7 bis 15,7% und bei Hydrierungstemperaturen im Bereich von ≥ 240°C im Bereich von 8,0 bis 12,0%, wobei ein Peak 6, der im Bereich von 18,1 bis 19,1 GC-Flächenprozente aufweist und nach der obigen GC-Methode bestimmt wurde, ausgenommen ist.

Bevorzugt liegt der GC-Flächenanteil des Peaks 7 der 7 Isomeren des 2,4- und 2,6-Diamino-1-methylcyclohexans, gaschromatographisch nach der oben beschriebenen Methode bestimmt, bei Hydrierungstemperaturen im Bereich von 130 bis ≥ 240°C im Bereich von 1,0 bis 10,0%, bei Hydrierungstemperaturen im Bereich von 130 bis 149°C im Bereich von 8,5 bis 10,0%, bei Hydrierungstemperaturen im Bereich von 150 bis 169°C im Bereich von 5,5 bis 8,4%, bei Hydrierungstemperaturen im Bereich von 170 bis 239°C im Bereich von 2,5 bis 5,4% und bei Hydrierungstemperaturen im Bereich von ≥ 240°C im Bereich von 1,0 bis 3,2%, wobei ein Peak 7, der im Bereich von 2,6 bis 3,6 GC-Flächenprozente aufweist und nach der obigen GC-Methode bestimmt wurde, ausgenommen ist.

Bei allen GC-Flächenprozentangaben der Peaks 1 bis 7 der erfindungsgemäßen Mischung sowie der Peaks 1 bis 7, die aus der erfindungsgemäßen Mischung ausgenommen sind, beträgt die Summe der Flächenprozente der Peaks 1 bis 7 100 %, bezogen auf die eingesetzte Menge an MDACH.

Die Hydrierung kann mit allem dem Fachmann bekannten Hydrierkatalysatoren durchgeführt werden wie, Rhodium, Ruthenium, Palladium, Platin oder Nickel enthaltende Katalysatoren. Bevorzugt sind Ruthenium enthaltende Katalysatoren für die Hydrierung. Besonders bevorzugt sind Rutheniumoxidhydratkatalysatoren und Ruthenium Katalysatoren auf Trägern, wobei als Trägermaterial Aluminiumoxid, Siliziumoxid und Kohlenstoff geeignet sind.

Die Hydrierung kann in Suspension in Lösung oder in der Schmelze oder an einem Festbettkatalysator in Lösung oder in der Schmelze durchgeführt werden. Unabhängig in welcher Weise der Hydrierkatalysator eingesetzt wird, kann die Verfahrensführung batchweise oder kontinuierlich durchgeführt werden. Bevorzugt ist die Hydrierung in Suspension in der Schmelze kontinuierlich durchzuführen.

Die Hydrierung des 2,4-und 2,6-TDAs im Verhältnis von 75 bis 85 Gew.-% 2,4- zu 15 bis 25 Gew.-% 2,6-TDA kann bei Temperaturen im Bereich von 130 bis ≥ 240°C erfolgen. Bevorzugt sind Temperaturen im Bereich von 130 bis 270°C, besonders bevorzugt im Bereich von 140 bis 250°C. Für die Hydrierung in Suspension sind Temperaturen im Bereich von 140 bis 270°C bevorzugt. Besonders bevorzugt sind Temperaturen im Bereich von 200 bis 250°C für die Suspension. Für die Hydrierung mit einem Festbettkatalysatoren sind die Temperaturen bevorzugt im Bereich von 130 bis 250°C, besonders bevorzugt im Bereich von 140 bis 180°C.

Der Druck während der Hydrierung des 2,4-und 2,6-TDAs im Verhältnis von 75 bis 85 Gew.-% 2,4- zu 15 bis 25 Gew.-% 2,6-TDA liegt im Bereich von 90 bis 350 bar, bevorzugt im Bereich von 100 bis 300 bar. Für die Hydrierung in Suspension ist der Druck bevorzugt im Bereich von 150 bis 300 bar, besonders bevorzugt im Bereich von 200 bis 250 bar. Für die Hydrierung im Festbett liegt der Druck bevorzugt im Bereich von 100 bis 300 bar. Besonders bevorzugt im Bereich von 150 bis 250 bar.

Je nachdem bei welchen Bedingungen die Hydrierung durchgeführt wird, kann sich auch das Verhältnis des 2,4- und 2,6-TDAs im Bereich von 75 bis 85 Gew.-% 2,4- zu 15 bis 25 Gew.-% 2,6-TDA zu einem 2,4- und 2,6-Diamino-1-methylcyclohexans-Verhältnis im Bereich von 75 bis 95 Gew.-%2,4- zu 5 bis 25 Gew.-% 2,6-Diamino-1-methylcyclohexan verändern. Die Verhältnisse von 2,4- zu 2,6 TDA müssen daher nicht dem Verhältnis von 2,4- zu 2,6-Diamino-1-methylcyclohexan entsprechen, liegen aber in einem Bereich von 75 bis 95 Gew.-% 2,4- zu 15 bis 25 Gew.-% 2,6-Diamino-1-methylcyclohexan.

Die erfindungsgemäße Mischung enthaltend die 7 Isomeren des 2,4- und 2,6-Diamino-1-methylcyclohexans kann noch weitere dem Fachmann bekannte Härter für Epoxide enthalten. Diese weiteren Härter sind ausgewählt aus der Gruppe von Aminen, Anhydriden und Imidazolen.

Das stöchiometrische Verhältnis von Epoxidgruppen (gemäß Epoxyäquivaletgewicht EEW) zu Aminogruppen (gemäß aktiven Wasserstoff Äquivalentgewicht AHEW) der Mischung enthaltend 2,4- und 2,6-Diamino-1-methylcyclohexan liegt im Bereich von 0,7 bis 1,2 besonders bevorzugt im Bereich von 0,9 bis 1,1.

In der erfindungsgemäßen Zusammensetzung können entweder in der Mischung und/oder aber im Epoxidharz noch weitere Füllstoffe enthalten sein. Unter weiteren Füllstoffen sind faserverstärkendes Material, Thixotropiermittel (hydrophile und hydrophobe pyrogene Kieselsäuren), UV - Stabilisatoren (nanoskalige Oxide wie Titandioxid und Zinkoxid), Flammschutzmittel (Polyphosphate und Phosphor), Silicate und Carbonate zu verstehen. Die faserverstärkenden Materialien können als Gewebe, Uni- und Multiaxiale Gelege, Vliese und Kurzfasern eingesetzt werden. Die faserverstärkenden Materialien sind dabei ausgewählt aus der Gruppe von Glasfasern, Kohlefasern, Aramidfasern, PE-Fasern (Dyneema) und Basaltfasern. Bevorzugt sind Gewebe und Uni- und Multiaxialgelege aus Glasfasern und Kohlefasern. Besonders bevorzugt sind Uni- und Multiaxialgelege aus Glasfasern. Die Flügelschalen für Windkraftanlagen werden bevorzugt mit Glasfaser-Gelegen ausgelegt.

Die so erhaltene erfindungsgemäße Mischung von 7 Isomeren des 2,4- und 2,6-Diamino-1-methylcyclohexans im Verhältnis von 75 bis 95 Gew.-% 2,4- zu 5 bis 25 Gew.-% 2,6-Diamino-1-methylcyclohexans kann mit mindestens einem Epoxidharz in der erfindungsgemäßen Zusammensetzung für unterschiedlich gehärtete Epoxidharze eingesetzt werden. Hierbei kann durch die Wahl einer speziellen Mischung mit einem bestimmten Mengenverhältnis der einzelnen 7 Isomeren zueinander die Aushärtezeit der Zusammensetzung so bestimmt werden, dass gerade große Bauteile vollständig von der noch fließfähigen Zusammensetzung ausgefüllt werden, bevor die einsetzende Härtung ein Durchdringen des gesamten Bauteils unmöglich macht.

Mit der erfindungsgemäßen Zusammensetzung können gehärtete Epoxidharze, Formkörper und Verbundwerkstoffe hergestellt werden. Die erfindungsgemäße Zusammensetzung kann aber auch als Klebstoff eingesetzt werden.

Bevorzugte Formkörper und Verbundwerkstoffe sind ausgewählt aus der Gruppe von Windflügeln für Windkrafträder, Bauteile für Automobilanwendungen wie Dachflächen und Karosserieteile, Anwendungen im Bootsbau und Flugzeugbau sowie Herstellung von Formen "tooling". Neben den Verbundwerkstoffen und Formkörpern sind auch Bodenbeläge und Beschichtungen als bevorzugte Anwendungen zu nennen. Für Beschichtungen kann es vorteilhaft sein einen Teil der Aminogruppe der erfindungsgemäßen Zusammensetzung aus Isomeren des Diamino-Methylcyclohexans im Vorfeld mit Eoxidgruppen abreagieren zu lassen (sog. Adduktieren).Besonders bevorzugt sind Windflügel für Windkrafträder und Bodenbeschichtungen.

### Beispiele

### Hydrierungsbeispiele:

### Suspensionshydrierungen

### Beispiel 1: Herstellung des Suspensionskatalysators RuO(OH)x

Herstellung laut DE-A 2132547 gemäß Beispiel 1.

### Beispiel 2: Hydrierung von 2,4-/2,6-TDA

In einem 3,5 L Druckreaktor wurden 1,2 g des gemäß Beispiel 1 hergestellten Ru-Suspensionskatalysators in 1,8 L einer 30%igen Lösung von 2,4-/2,6-TDA in THF suspendiert. Die Hydrierung wurde mit reinem Wasserstoff bei einem konstanten Druck von 200 bar und einer Temperatur von 220°C durchgeführt. Es wurde so lange hydriert, bis kein Wasserstoff mehr aufgenommen wurde (12 Stunden). Der Reaktor wurde anschließend entspannt. Der Umsatz an TDA betrug 99,9%, die Selektivität bezogen auf MDACH lag bei 91,1%, der Leichtsiederanteil durch Desaminierung (Methylaminocyclohexane) bei 8,4%. Der Austrag wurde bei 10 mbar und 80 - 85°C destillativ aufgereinigt.
Zusammensetzung: MDACH (99,9%), Isomerenverhältnisse siehe Tabelle 2.

### Beispiel 3: Hydrierung von 2,4-/2,6-TDA

In einem 3,5 L Druckreaktor wurden 8,0 g des gemäß Beispiel 1 hergestellten Ru-Suspensionskatalysators in 1,8 L einer 30%igen Lösung von 2,4-/2,6-TDA in THF suspendiert. Die Hydrierung wurde mit reinem Wasserstoff bei einem konstanten Druck von 200 bar und einer Temperatur von 180°C durchgeführt. Es wurde so lange hydriert, bis kein Wasserstoff mehr aufgenommen wurde (10 Stunden). Der Reaktor wurde anschließend entspannt. Der Umsatz an TDA betrug 99,9%, die Selektivität bezogen auf MDACH lag bei 97,6%, der Leichtsiederanteil durch Desaminierung (Methylaminocyclohexane) bei 2,2%. Der Austrag wurde bei 10 mbar und 80 - 85°C destillativ aufgereinigt.
Zusammensetzung: MDACH (99,8%), Isomerenverhältnisse siehe Tabelle 2.

### Beispiel 4: Hydrierung von 2,4-/2,6-TDA

In einem 3,5 L Druckreaktor wurden 8,0 g des gemäß Beispiel 1 hergestellten Ru-Suspensionskatalysators in 1,8 L einer 30%igen Lösung von 2,4-/2,6-TDA in THF suspendiert. Die Hydrierung wurde mit reinem Wasserstoff bei einem konstanten Druck von 200 bar und einer Temperatur von 160°C durchgeführt. Es wurde so lange hydriert, bis kein Wasserstoff mehr aufgenommen wurde (12 Stunden). Der Reaktor wurde anschließend entspannt. Der Umsatz an TDA betrug 99,4%, die Selektivität bezogen auf MDACH lag bei 98,0%, der Leichtsiederanteil durch Desaminierung (Methylaminocyclohexane) bei 1,3%. Der Austrag wurde bei 10 mbar und 80-85°C destillativ aufgereinigt.
Zusammensetzung: MDACH (99,9%), Isomerenverhältnisse siehe Tabelle 2.

### Beispiel 5: Hydrierung von 2,4-/2,6-TDA

In einem 3,5 L Druckreaktor wurden 8,0 g des gemäß Beispiel 1 hergestellten Ru-Suspensionskatalysators in 1,8 L einer 30%igen Lösung von 2,4-/2,6-TDA in THF suspendiert. Die Hydrierung wurde mit reinem Wasserstoff bei einem konstanten Druck von 200 bar und einer Temperatur von 140°C durchgeführt. Es wurde so lange hydriert, bis kein Wasserstoff mehr aufgenommen wurde (40 Stunden). Der Reaktor wurde anschließend entspannt. Der Umsatz an TDA betrug 99,3%, die Selektivität bezogen auf MDACH lag bei 97,7%, der Leichtsiederanteil durch Desaminierung (Methylaminocyclohexane) bei 1,5%. Der Austrag wurde bei 10 mbar und 80 - 85°C destillativ aufgereinigt.
Zusammensetzung: MDACH (99,9%), Isomerenverhältnisse siehe Tabelle 2.

### Beispiel 6: Hydrierung von 2,4-/2,6-TDA

In einer kontinuierlich betrieben Laborapparatur bestehend aus zwei hintereinander geschalteten Rohrreaktoren (Hauptreaktor: Vol = 300 mL, mit Umlauf; Nachreaktor: Vol = 150 mL, gerader Durchgang) wurde eine Suspension des gemäß Beispiel 1 hergestellten Ru-Katalysators in einer TDA-Schmelze (Ru-Gehalt: 200 ppm) mit reinem Wasserstoff bei einem konstanten Druck von 200 bar und einer mittleren Temperatur von 240°C hydriert. Dabei wurde die TDA-Schmelze mit 20-40 g/h zugeführt. Der Umsatz an TDA betrug 99,3%, die Selektivität bezogen auf MDACH lag bei 97,7%, der Leichtsiederanteil durch Desaminierung (Methylaminocyclohexane) bei 1,5%. Der Austrag wurde bei 10 mbar und 80 - 85°C destillativ aufgereinigt.
Zusammensetzung: MDACH (99,6%), Isomerenverhältnisse siehe Tabelle 2.

### Festbetthydrierung

### Beispiel 7: Herstellung des Festbettkatalysators (0,5%Ru/Al₂O₃)

Herstellung laut DE-A 19624485, (Beispiel Herstellung des Katalysators).

### Beispiel 8: Hydrierung von 2,4-/2,6-TDA

Eine kontinuierlich betriebene Anlage bestehend aus zwei hintereinander geschalteten Rohrreaktoren (Hauptreaktor 150 mL und Nachreaktor 100 mL) wurde mit dem gemäß Beispiel 7 hergestellten Ru/Al₂O₃-Katalysator befüllt. Der Hauptreaktor wurde in Rieselfahrweise mit Umlauf betrieben, der Nachreaktor im geraden Durchgang in Sumpffahrweise. TDA-Lösung (20% in THF) (1 mL/min) wurde mit reinem Wasserstoff bei einer mittleren Temperatur von 144°C im Hauptreaktor und 163°C im Nachreaktor und einem konstanten Druck von 200 bar durch die Reaktorkaskade gepumpt. Der Umsatz an TDA betrug 100%, die Selektivität bezogen auf MDACH lag bei 59,7%, der Leichtsiederanteil durch Desaminierung (Methylaminocyclohexane) bei 33,3%. Der Austrag wurde bei 10 mbar und 80 - 85°C destillativ aufgereinigt.
Zusammensetzung: MDACH (99,9%), Isomerenverhältnisse siehe Tabelle 2.

### Beispiel 9: Hydrierung von 2,4-/2,6-TDA

Die Hydrierung wurde analog Beispiel 6 bei 240bar und einer mittleren Temperatur von 235°C durchgeführt (Ru-Gehalt 100ppm). Der Umsatz an TDA betrug 99%, die Selektivität bezogen auf MDACH lag bei 82%, der Leichtsiederanteil durch Desaminierung (Methylaminocyclohexane) bei 18%. Der Austrag wurde destillativ aufgereinigt. Zusammensetzung: MDACH (99,8%), Isomerenverhältnisse siehe Tabelle 2.

### Gaschromatographische Untersuchungen

Die Reaktionsausträge sowie die Reinwaren wurden mittels Gaschromatographie untersucht.

**Tabelle 1:**

| Retentionszeiten der Verbindungen: | |
|---|---|
| Retentionszeit [min] | Verbindung |
| 5,6-6,5 | Leichtsieder (Aminomethylcyclohexane) |
| 15,3 | MDACH Peak 1 |
| 15,5 | MDACH Peak 2 |
| 15,7 | MDACH Peak 3 |
| 16,2 | MDACH Peak 4 |
| 16,4 | MDACH Peak 5 |
| 17,4 | MDACH Peak 6 |
| 18,2 | MDACH Peak 7 |
| 33,1 | 2,4-TDA |
| 33,4 | 2,6-TDA |

Für die gaschromatographischen Untersuchungen wird eine Probe enthaltend 2,4-und 2,6-Diamino-1-methylcycylohexan im Verhältnis 75 bis 95 Gew.-% 2,4- zu 5 bis 25 Gew.-% 2,6-Diamino-1-methyl-cyclohexan (destillierte Ware) im Verhältnis 1:5 mit THF verdünnt. 0,5 µl dieser verdünnten Probe werden mittels einer Hamilton-Spritze an einem Gaschromatogramm (HP 6890) auf eine RTX35 Amin-Säule der Firma Restek Corporation (Stationäre Phase: 35 Gew.-% Diphenyle, 65Gew.-% Dimethylpolysiloxane; Länge: 30 m; Innendurchmesser: 0,25 mm; Filmdicke: 0,5 µm) bei Temperaturen im Bereich von 100 bis ≥ 250°C (Ofen: Einspritztemperatur: 100°C; Heizrate: 1°C/min bis Temperatur: 120°C; Heizrate: 5°C/min bis Endtemperatur: 250°C, bei 250°C für 10 min belassen) und einer eingestellten Geschwindigkeit von 40 ml/min (Trägergas: Helium; Eingangsdruck: 1 bar; Split ratio: 1:40) aufgegeben. Der Flammionisationsdetektor wird bei 280°C betrieben.

**Tabelle 2:**

| Isomerenverteilung in der erfindungsgemäßen Mischung in Abhängigkeit von den Reaktionsbedingungen | | | | | | | | |
|---|---|---|---|---|---|---|---|---|
| Zusammensetzung der erfindungsgemäßen Mischung-Reinmuster (nach Destillation) aus den Beispielen (Angaben in GC-Flächenprozent): | | | | | | | | |
| MDACH | Bsp. 2 (220°C) | Bsp. 3 (180°C) | Bsp. 4 (160°C) | Bsp. 5 (140°C) | Bsp. 6 (240°C) | Bsp. 8 | Bsp. 9 (235°C) | Vergl. (Rh/Al₂O₃, 150°C) |
| | Suspension, batch, in THF | | | | Susp. konti in Schmelze | Festbett konti in THF | Susp. konti in Schmelze | EP-B 0443344 batch in THF |
| Peak 1 | 34,6 | 32,4 | 10,3 | 5,7 | 46,6 | 22,4 | 43,4 | 16,1 |
| Peak 2 | 4,0 | 2,8 | 0,6 | 0,7 | 7,5 | 1,8 | 6,1 | 0,1 |
| Peak 3 | 14,7 | 13,5 | 12,2 | 10,8 | 16,4 | 13,3 | 17,8 | 32,7 |
| Peak 4 | 21,0 | 24,6 | 28,1 | 27,6 | 12,9 | 26,7 | 13,8 | 24,0 |
| Peak 5 | 6,9 | 6,7 | 4,8 | 8,8 | 5,4 | 6,8 | 6,2 | 4,6 |
| Peak 6 | 15,2 | 16,5 | 36,3 | 37,3 | 9,0 | 23,4 | 10,3 | 18,6 |
| Peak 7 | 3,5 | 3,3 | 7,6 | 9,0 | 1,8 | 5,5 | 2,2 | 3,1 |

### Vergleichsbeispiel:

### Nachstellung Beispiel 3 aus EP 0 443 344 B1 (Air Products)

Das Beispiel 3 aus EP 0 443 344 B1 wurde anhand der Prozedur von Beispiel 1 aus EP 0 443 344 B1 nachgestellt. Da die Versuche in einem 3,5 L-Autoklav anstelle eines 2 L-Autoklav durchgeführt wurden, wurden alle Mengenangaben mit dem Faktor 1,75 multipliziert.

Der Austrag wurde bei 10 mbar und 80-85°C destillativ aufgereinigt.

Zusammensetzung: Gemisch aus 2,4- und 2,6-Diamino-1-methylcyclohexan (99,2%), Isomerenverhältnisse siehe Tabelle 2.

### Anwendungsergebnisse der unterschiedlichen Beispiele 2, 5, 8 und 9:

### Allgemeine Arbeitsvorschrift zur Herstellung der Reinharzplatten:

Die erfindungsgemäße Zusammensetzung enthält ein Epoxidharz und die Mischung im Verhältnis: 100:17
Hierbei wurde folgendes Epoxidharz eingesetzt:
Bisphenol-A-Harz mit EEW = 187
350 g Harz
59,5 g Härter

### Durchführung:

Die Mischung wurde in je ein 1l Chemikalienglas gefüllt und ca. 10 min. mit einem Propellerfüher und 300 U/min gerührt. Anschließend wird die Zusammensetzung in eine Aluminiumform mit 23 x 35 cm gegossen. Die Aluminiumformen sind durch 4mm dicken Silikondichtungen von einander getrennt und wurden vor dem Ausfüllen mit der erfindungsgemäßen Zusammensetzung mit dem Trennmittel PAT 623/B auf einem Tuch ausgewischt. Nach Einfüllen der erfindungsgemäßen Zusammensetzung werden die Formen mit Klammern zusammengehalten.

Die Aushärtung der hergestellten Harzplatten erfolgt für 2 h bei 80°C und anschließend für 3h bei 150°C in einem aufgeheizten Wärmeschrank mit Abluft.

Um den Einfluss der Stereoisomerenverteilung vom MDACH zu untersuchen wurden drei unterschiedliche MDACH Proben aus Tabelle 2 eingesetzt.

### Beispiel 2

### Beispiel 5

### Beispiel 8

### Beispiel 9

Jeweils wurde ein DSC Run gemacht um den Reaktionsverlauf zu bestimmen (onset, Delta H, Peak max, Tg DSC)

Jeweils wurde eine Platte gegossen und im Ofen ausgehärtet (2h bei 80°C und 3h bei 150°C) und dann vermessen (Tg Platte DSC, Zugversuch, Biegeversuch)

Jeweils wurde ein Ansatz im Rotationsviskositmeter gemacht um die Topfzeit bei 23°C zu bestimmen (pot-life). Pot life ist dabei die Zeit bei RT, die das System braucht, um eine Viskosität von 10000 mPas zu erreichen. Dann ist der Gelpunkt erreicht. Das ist die eigentliche Verarbeitungszeit oder offene Zeit.

### Temperaturprogram für das DSC

### 1. Lauf

Start bei 0°C dann aufheizen 5k/min bis 180°C. 3 min halten bei 180°C. Abkühlen mit 20k/min auf 0°C.

### 2. Lauf

### Aufheizen von 0°C mit 20k/min bis 200°C

**Tabelle 3:**

| Härter | DELTA H | Onset (DSC) | Peak max. (DSC) | | TG DSC run | | Tg Platte (DSC) | |
|---|---|---|---|---|---|---|---|---|
| Bsp. 2 | 396,1 J/g | 68,9°C | 106,8°C | | 154,7°C | | 153,4°C | |
| Bsp. 5 | 405,3 J/g | 71,6°C | 102,7°C | | 146,6°C | | 148,2°C | |
| Bsp. 8 | 412,9 J/g | 72,4°C | 103,8°C | | 144,8°C | | 151,1°C | |
| Bsp. 9 | 367,6 J/g | 76,3°C | 104,9°C | | 154,4°C | | 159,3°C | |
| | | | | | | | | |

| Härter | Zeit bis 10000 mPas bei 23°C erreicht | | Zugversuch ISO 527-2: 1996 | | | Biegeversuch ISO 178:2006 | | |
|---|---|---|---|---|---|---|---|---|
| | | | E-t M pa | ε_M % | | E_f Mpa | | ε_fM % |
| Bsp. 2 | 143 min | | 2910 | 5,49 | | 3053 | | 6,10 |
| Bsp. 5 | 117 min | | 2962 | 4,20 | | 3065 | | 5,58 |
| Bsp. 8 | 138 min | | 2970 | 4,19 | | 3083 | | 5,79 |
| Bsp. 9 | 159 min | | 2963 | 6,97 | | 3087 | | 6,10 |

- Delta H: = Reaktionsenthalpie
- Onset (DSC): = Temperatur im DSC Programm bei der die Reaktion anspringt
- Peak max (DCS): = Temperatur bei der die Reaktionsenthalpie maximal ist
- TG (DSC run): = Glasübergangstemperatur ermittelt im 2. DSC Lauf
- TG Platte (DSC): = Glasübergangstemperatur einer im Ofen ausgehärteten Platte ermittelt durch DCS

Zur Bestimmung der Reaktivitätsunterschiede wurde, eine entsprechende Menge Harz mit einer stöchiometrischen Menge des Härters gemischt und das Aushärteverhalten in einem Rotationsviskosimeter bei 23°C aufgezeichnet, bis ein Wert von ca.
10.000 MPas erreicht wurde. Die Tabelle 3 zeigt dabei, dass das Beispiel 2 nach 143min, das Beispiel 5 nach 117min und das Beispiel 8 nach 138min den Viskositätswert von 10.000 MPas erreicht hat.

### Auswertung der Ergebnisse:

Die Ergebnisse zeigen, dass durch die unterschiedlichen Hydriertemperaturen und Verfahren die Verteilung der Stereoisomeren gesteuert werden kann.

In den Anwendungstests zur Aushärtung von Epoxidharzen konnte gezeigt werden, dass die Aushärtegeschwindigkeit der Proben deutlich unterschiedlich ist. Dazu wurde in einem Rotationsviskosimeter die Zeit bis zum Anstieg auf ca. 10000 MPas ermittelt. Somit ist es möglich, z.B. durch Erhöhung der Hydriertemperatur MDACH-Gemische zu erzielen, die in Epoxy-Anwendungen verlangsamte Aushärtegeschwindigkeit in der Anfangszeit (Topfzeit) ermöglichen. Langsamere Aushärtung ist beispielsweise gewünscht, um eine gleichmäßige Verteilung zum Beispiel in einem Composite-Bauteil zu gewährleisten.

Neben der Topfzeit wird durch das Isomerengemisch auch die Glasübergangstemperatur positiv beeinflusst. Somit führt beispielsweise höhere Reaktionstemperatur bei der Hydrierung neben längeren Verarbeitungszeiten gleichzeitig zu einem Produktgemisch, welches eine höhere Glasübergangstemperatur zur Folge hat.

## Patentansprüche

1. Zusammensetzung enthaltend
a) mindestens ein Epoxidharz und
b) eine Mischung enthaltend die 7 Isomeren des 2,4- und 2,6-Diamino-1-methylcyclohexans im Verhältnis von 75 bis 95 Gew.-%2,4- zu 5 bis 25 Gew.-% 2,6-Diamino-1-methylcyclohexans, **dadurch gekennzeichnet, dass** die GC-Flächenprozente der 7 Isomeren, nach aufsteigenden Retentionszeiten geordnet, gaschromatographisch mit einer 30 m langen, einen Innendurchmesser von 0,25 mm und einer Filmdicke von 0,5 µm enthaltenden Säule, die als bewegliche Phase mit Helium betrieben wird und als stationäre Phase 35 Gew.-% Diphenyl und 65 Gew.-% Dimethylpolysiloxan enthält, bei Temperaturen im Bereich von 100 bis 250°C während der gesamten Messung betrieben wird und ein Flammenionisationsdetektor eingesetzt wird, der bei 280°C betrieben wird, wobei die 7 Isomeren enthaltende Mischung nach Destillation in Tetrahydrofuran gelöst wird, die Lösung in den Gaschromatographen mit einer Einspritztemperatur von 100°C, einem Eingangsdruck von 1 bar eingespritzt wird und eine Heizrate von 1 °C/min bis eine Temperatur von 120°C erreicht ist, eingestellt wird, danach die Heizrate auf 5°C/min umgestellt und bis zur Endtemperatur von 250°C aufrechterhalten wird, anschließend die Temperatur von 250°C für 10 min gehalten wird und über die gesamte Messung die Geschwindigkeit des mit der Mischung angereichertem Heliums von 40 ml/min eingestellt ist und die Messung mit einem Split ratio von 1 zu 40 betrieben wird, ermittelt werden und
für Peak 1 im Bereich von 4,0 bis 49,0 %,
für Peak 2 im Bereich von 0,3 bis 9,0 %,
für Peak 3 im Bereich von 9,0 bis 19,0%
für Peak 4 im Bereich von 11,0 bis 30,0 %,
für Peak 5 im Bereich von 3,0 bis 10,0 %
für Peak 6 im Bereich von 8,0 bis 40,0 % und
für Peak 7 im Bereich von 1,0 bis 10,0 % liegen, wobei die Summe der GC-Flächenprozente bezogen auf die eingesetzte Menge an 2,4- und 2,6-Diaminomethylcyclohexan 100% ergibt und
eine Mischung, enthaltend die 7 Isomeren des 2,4- und 2,6-Diamino-1-methylcyclohexans im Verhältnis von 75 bis 95 Gew.-% 2,4- zu 5 bis 25 Gew.-% 2,6-Diamino-1-methylcyclohexans, deren GC-Flächenprozente nach aufsteigenden Retentionszeiten geordnet, bestimmt nach dem gleichen gaschromatographischem Verfahren,
für Peak 1 im Bereich von 15,6 bis16,6%,
für Peak 2 im Bereich von 0,1 bis 0,4%,
für Peak 3 im Bereich von 32,2 bis 33,2%
für Peak 4 im Bereich von 23,5 bis 24,5%
für Peak 5 im Bereich von 4,1 bis 5,1 %
für Peak 6 im Bereich von 18,1 bis 19,1% und
für Peak 7 im Bereich von 2,6 bis 3,6% liegen, wobei die Summe der GC-Flächenprozente der Peaks 1 bis 7 bezogen auf die eingesetzte Menge an 2,4- und 2,6 Diaminomethylcyclohexan 100% ergibt, ausgenommen ist.

2. Zusammensetzung nach Anspruch 1, **dadurch gekennzeichnet, dass** die 7 Isomeren des 2,4- und 2,6-Diamino-1-methylcyclohexans erhältlich sind durch Hydrierung eines Gemisches enthaltend 75 bis 85 Gew.-% 2,4-Toluoldiamin und 15 bis 25 Gew.-% 2,6-Toluoldiamin.

3. Zusammensetzung nach einem der Ansprüche 1 bis 2, **dadurch gekennzeichnet, dass** die Hydrierung mit Hilfe eines Ruthenium enthaltenden Katalysators durchgeführt wird.

4. Zusammensetzung nach einem der Ansprüche 1 bis 3, **dadurch gekennzeichnet, dass** die Hydrierung in Lösung oder Schmelze bei mittleren Temperaturen im Bereich von ≥ 210 °C durchgeführt wurde und die GC-Flächenprozente
für Peak 1 im Bereich von 33,5 bis 49,0%
für Peak 2 im Bereich von 3,4 bis 9,0%
für Peak 3 im Bereich von 14,1 bis 19,0%
für Peak 4 im Bereich von 11,0 bis 22,7%
für Peak 5 im Bereich von 5,1 bis 7,7%
für Peak 6 im Bereich von 8,0 bis 15,7%
für Peak 7 im Bereich von 1,0 bis 5,4%
liegen, wobei die Summe der GC-Flächenprozente der Peaks 1 bis 7 bezogen auf eingesetzte Menge an 2,4 und 2,6-Diamino-1-methylcyclohexan 100% ergibt.

5. Zusammensetzung nach Anspruch 4, **dadurch gekennzeichnet, dass** die Hydrierung in Lösung bei mittleren Temperaturen im Bereich von 210 bis 239°C durchgeführt wurde und die GC-Flächenprozente
für Peak 1 im Bereich von 33,5 bis 45,9%
für Peak 2 im Bereich von 3,4 bis 5,6%
für Peak 3 im Bereich von 14,1 bis 16,1%
für Peak 4 im Bereich von 16,9 bis 22,7%
für Peak 5 im Bereich von 6,6 bis 7,7%
für Peak 6 im Bereich von 12,1 bis 15,7%
für Peak 7 im Bereich von 2,5 bis 5,4%
liegen, wobei die Summe der GC-Flächenprozente der Peaks 1 bis 7 bezogen auf eingesetzte Menge an 2,4 und 2,6-Diamino-1-methylcyclohexan 100% ergibt.

6. Zusammensetzung nach Anspruch 4, **dadurch gekennzeichnet, dass** die Hydrierung in der Schmelze bei mittleren Temperaturen im Bereich von 210 bis 239°C durchgeführt wurde und die GC-Flächenprozente
für Peak 1 im Bereich von 38,5 bis 46,0%
für Peak 2 im Bereich von 4,7 bis 8,7%
für Peak 3 im Bereich von 14,8 bis 19,0%
für Peak 4 im Bereich von 12,1 bis 17,9%
für Peak 5 im Bereich von 5,5 bis 7,1 %
für Peak 6 im Bereich von 8,7 bis 13,2%
für Peak 7 im Bereich von 1,4 bis 3,2%
liegen, wobei die Summe der GC-Flächenprozente der Peaks 1 bis 7 bezogen auf eingesetzte Menge an 2,4 und 2,6-Diamino-1-methylcyclohexan 100% ergibt.

7. Zusammensetzung nach Anspruch 4, **dadurch gekennzeichnet, dass** die Hydrierung in der Schmelze bei mittleren Temperaturen ≥ 240°C durchgeführt wird und die GC-Flächenprozente
für Peak 1 im Bereich von 46,0 bis 49,0%
für Peak 2 im Bereich von 5,7 bis 9,0%
für Peak 3 im Bereich von 16,2 bis 19,0%
für Peak 4 im Bereich von 11,0 bis 16,8%
für Peak 5 im Bereich von 5,1 bis 6,5%
für Peak 6 im Bereich von 8,0 bis 12,0%
für Peak 7 im Bereich von 1,0 bis 2,4%
liegen, wobei die Summe der GC-Flächenprozente der Peaks 1 bis 7 bezogen auf eingesetzte Menge an 2,4 und 2,6-Diamino-1-methylcyclohexan 100% ergibt.

8. Zusammensetzung nach einem der Ansprüche 1 bis 3, **dadurch gekennzeichnet, dass** die Hydrierung in Lösung bei mittleren Temperaturen im Bereich von 170 bis 209°C durchgeführt wird und die GC-Flächenprozente für Peak 1 im Bereich von 22,4 bis 33,4%
für Peak 2 im Bereich von 1,7 bis 3,3%
für Peak 3 im Bereich von 12,9 bis 14,0%
für Peak 4 im Bereich von 22,8 bis 25,0%
für Peak 5 im Bereich von 6,6 bis 7,7%
für Peak 6 im Bereich von 15,8 bis 26,3%
für Peak 7 im Bereich von 2,5 bis 5,4%
liegen, wobei die Summe der GC-Flächenprozente der Peaks 1 bis 7 bezogen auf eingesetzte Menge an 2,4 und 2,6-Diamino-1-methylcyclohexan 100% ergibt.

9. Zusammensetzung nach einem der Ansprüche 1 bis 3, **dadurch gekennzeichnet, dass** die die Hydrierung in Lösung bei mittleren Temperaturen im Bereich von 150 bis 169°C durchgeführt wird und die GC-Flächenprozente
für Peak 1 im Bereich von 8,0 bis 22,3%
für Peak 2 im Bereich von 0,3 bis 1,6%
für Peak 3 im Bereich von 11,5 bis 12,8%
für Peak 4 im Bereich von 27,9 bis 30,0%
für Peak 5 im Bereich von 3,0 bis 5,0%
für Peak 6 im Bereich von 26,4 bis 36,8%
für Peak 7 im Bereich von 5,5 bis 8,4%
liegen, wobei die Summe der GC-Flächenprozente der Peaks 1 bis 7 bezogen auf eingesetzte Menge an 2,4 und 2,6-Diamino-1-methylcyclohexan 100% ergibt.

10. Zusammensetzung nach einem der Ansprüche 1 bis 3, **dadurch gekennzeichnet, dass** die die Hydrierung in Lösung bei mittleren Temperaturen im Bereich von 130 bis 149°C durchgeführt wird und die GC-Flächenprozente für Peak 1 im Bereich von 4,0 bis 7,9%
für Peak 2 im Bereich von 0,3 bis 1,6%
für Peak 3 im Bereich von 9,0 bis 11,4%
für Peak 4 im Bereich von 25,1 bis 27,8%
für Peak 5 im Bereich von 7,8 bis 10,0%
für Peak 6 im Bereich von 36,9 bis 40,0%
für Peak 7 im Bereich von 8,5 bis 10,0%
liegen, wobei die Summe der GC-Flächenprozente der Peaks 1 bis 7 bezogen auf eingesetzte Menge an 2,4 und 2,6-Diamino-1-methylcyclohexan 100% ergibt.

11. Zusammensetzung nach einem der Ansprüche 1 bis 3, **dadurch gekennzeichnet, dass** die Hydrierung am Festbettkatalysator bei einer maximalen Temperatur von 155 bis 175 °C durchgeführt wird und die GC-Flächenprozente
für Peak 1 im Bereich von 21,0 bis 25,0%
für Peak 2 im Bereich von 1,0 bis 3,0%
für Peak 3 im Bereich von 11,0 bis 16,0%
für Peak 4 im Bereich von 23,0 bis 29,0%
für Peak 5 im Bereich von 5,0 bis 8,5%
für Peak 6 im Bereich von 20,0 bis 25,0%
für Peak 7 im Bereich von 4,0 bis 7,0%
liegen, wobei die Summe der GC-Flächenprozente der Peaks 1 bis 7 bezogen auf eingesetzte Menge an 2,4 und 2,6-Diamino-1-methylcyclohexan 100% ergibt.

12. Zusammensetzung nach einem der Ansprüche 1 bis 11, **dadurch gekennzeichnet, dass** das Epoxidharz ausgewählt ist aus der Gruppe von Glycidpolyether, Glycidpolyester und Glycidamine sind.

13. Zusammensetzung nach einem der Ansprüche 1 bis 12, wobei das stöchiometrische Verhältnis von Epoxidgruppen zu reaktivem Wassertoff an einer Amingruppe der Mischung im Bereich von 0,7 bis 1,2 liegt.

14. Verfahren zur Herstellung der Zusammensetzung nach einem der Ansprüche 1 bis 13, **dadurch gekennzeichnet, dass** das Epoxidharz mit der Mischung bei Temperaturen im Bereich von 0°C bis 70°C vermischt wird.

15. Verwendung der Zusammensetzung nach einem der Ansprüche 1 bis 13 zur Herstellung von gehärteten Epoxidharzen.

16. Gehärtetes Epoxidharz erhältlich durch Aushärtung der Zusammensetzung nach einem der Ansprüche 1 bis 13.

17. Mischung enthaltend die 7 Isomeren des 2,4- und 2,6-Diamino-1-methylcyclohexans im Verhältnis von 75 bis 95 Gew.-%2,4- zu 5 bis 25 Gew.-% 2,6-Diamino-1-methylcyclohexans, **dadurch gekennzeichnet, dass** die GC- Flächenprozente der 7 Isomeren, nach aufsteigenden Retentionszeiten geordnet, gaschromatographisch mit einer 30 m langen, einen Innendurchmesser von 0,25 mm und einer Filmdicke von 0,5 µm enthaltenden Säule, die als bewegliche Phase mit Helium betrieben wird und als stationäre Phase 35 Gew.-% Diphenyl und 65 Gew.-% Dimethylpolysiloxan enthält, bei Temperaturen im Bereich von 100 bis 250°C während der gesamten Messung betrieben wird und ein Flammenionisationsdetektor eingesetzt wird, der bei 280°C betrieben wird, wobei die 7 Isomeren enthaltende Mischung nach Destillation in Tetrahydrofuran gelöst wird, die Lösung in den Gaschromatographen mit einer Einspritztemperatur von 100°C, einem Eingangsdruck von 1 bar eingespritzt wird und eine Heizrate von 1 °C/min bis eine Temperatur von 120°C erreicht ist, eingestellt wird, danach die Heizrate auf 5°C/min umgestellt und bis zur Endtemperatur von 250°C aufrechterhalten wird, anschließend die Temperatur von 250°C für 10 min gehalten wird und über die gesamte Messung die Geschwindigkeit des mit der Mischung angereichertem Heliums von 40 ml/min eingestellt ist und die Messung mit einem Split ratio von 1 zu 40 betrieben wird, ermittelt werden und
für Peak 1 im Bereich von 4,0 bis 49,0 %,
für Peak 2 im Bereich von 0,3 bis 9,0 %,
für Peak 3 im Bereich von 9,0 bis 19,0%
für Peak 4 im Bereich von 11,0 bis 30,0 %,
für Peak 5 im Bereich von 3,0 bis 10,0 %
für Peak 6 im Bereich von 8,0 bis 40,0 % und
für Peak 7 im Bereich von 1,0 bis 10,0 % liegen, wobei die Summe der GC-Flächenprozente bezogen auf die eingesetzte Menge an 2,4- und 2,6 Diamino-1-methylcyclohexan 100% ergibt und
eine Mischung, enthaltend die 7 Isomeren des 2,4- und 2,6-Diamino-1-methylcyclohexans im Verhältnis von 75 bis 95 Gew.-% 2,4- zu 5 bis 25 Gew.-% 2,6-Diamino-1-methylcyclohexans, deren GC-Flächenprozente nach aufsteigenden Retentionszeiten geordnet, bestimmt nach dem gleichen gaschromatographischem Verfahren,
für Peak 1 im Bereich von 15,6 bis16,6%,
für Peak 2 im Bereich von 0,1 bis 0,4%,
für Peak 3 im Bereich von 32,2 bis 33,2%
für Peak 4 im Bereich von 23,5 bis 24,5%
für Peak 5 im Bereich von 4,1 bis 5,1 %
für Peak 6 im Bereich von 18,1 bis 19,1% und
für Peak 7 im Bereich von 2,6 bis 3,6% liegen, wobei die Summe der GC-Flächenprozente der Peaks 1 bis 7 bezogen auf die eingesetzte Menge an 2,4- und 2,6 Diamino-1-methylcyclohexan 100% ergibt, ausgenommen ist.

18. Mischung nach Anspruch 17, **dadurch gekennzeichnet, dass** die 7 Isomeren des 2,4- und 2,6-Diamino-1-methylcyclohexans erhältlich sind durch Hydrierung eines Gemisches enthaltend 75 bis 85 Gew.-% 2,4-Toluoldiamin und 15 bis 25 Gew.-% 2,6-Toluoldiamin mittels eines auf Aluminiumoxid geträgerten Ruthenium enthaltenden Katalysator bei Temperaturen im Bereich von 130 bis ≥ 240°C.

19. Verwendung der Mischung nach einem der Ansprüche 17 bis 18 zur Herstellung einer Zusammensetzung nach einem der Ansprüche 1 bis 13.

## Claims

1. A composition comprising
a) at least one epoxy resin and
b) a mixture comprising the 7 isomers of 2,4- and 2,6-diamino-1-methylcyclohexane in a ratio of 75 to 95% by weight of 2,4- to 5 to 25% by weight of 2,6-diamino-1-methylcyclohexane, wherein the GC area percentages of the 7 isomers, in order of ascending retention time, are determined by gas chromatography with a column of length 30 m, internal diameter 0.25 mm and film thickness 0.5 µm, which is operated with helium as the mobile phase and comprises 35% by weight of diphenyl and 65% by weight of dimethylpolysiloxane as the stationary phase, is operated at temperatures in the range from 100 to 250°C over the entire measurement, and a flame ionization detector which is operated at 280°C is used, dissolving the mixture comprising 7 isomers, after distillation, in tetrahydrofuran, injecting the solution into the gas chromatograph with an injection temperature of 100°C, an inlet pressure of 1 bar and a heating rate of 1°C/min is established until a temperature of 120°C is attained, then the heating rate is switched to 5°C/min and maintained until the end temperature of 250°C, then the temperature of 250°C is held for 10 min, and the rate of the helium enriched with the mixture of 40 ml/min is established over the entire measurement and the measurement is conducted with a split ratio of 1 to 40, and are
for peak 1 in the range from 4.0 to 49.0%,
for peak 2 in the range from 0.3 to 9.0%,
for peak 3 in the range from 9.0 to 19.0%
for peak 4 in the range from 11.0 to 30.0%,
for peak 5 in the range from 3.0 to 10.0%
for peak 6 in the range from 8.0 to 40.0 % and
for peak 7 in the range from 1.0 to 10.0%, where the sum of the GC area percentages based on the amount of 2,4- and 2,6-diaminomethylcyclohexane used adds up to 100%, and
a mixture comprising the 7 isomers of 2,4- and 2,6-diamino-1-methylcyclohexane in a ratio of 75 to 95% by weight of 2,4- to 5 to 25% by weight of 2,6-diamino-1-methylcyclohexane, the GC area percentages of which, in order of ascending retention time, determined by the same gas chromatography method, are
for peak 1 in the range from 15.6 to 16.6%,
for peak 2 in the range from 0.1 to 0.4%,
for peak 3 in the range from 32.2 to 33.2%
for peak 4 in the range from 23.5 to 24.5%
for peak 5 in the range from 4.1 to 5.1%
for peak 6 in the range from 18.1 to 19.1% and
for peak 7 in the range from 2.6 to 3.6%, where the sum of the GC area percentages of peaks 1 to 7, based on the amount of 2,4- and 2,6-diaminomethylcyclohexane used, adds up to 100%, is excluded.

2. The composition according to claim 1, wherein the 7 isomers of 2,4- and 2,6-diamino-1-methylcyclohexane are obtainable by hydrogenating a mixture comprising 75 to 85% by weight of 2,4-toluenediamine and 15 to 25% by weight of 2,6-toluenediamine.

3. The composition according to either of claims 1 and 2, wherein the hydrogenation is performed with the aid of a ruthenium-comprising catalyst.

4. The composition according to any of claims 1 to 3, wherein the hydrogenation has been performed in solution or melt at mean temperatures in the range of ≥ 210°C and the GC area percentages are
for peak 1 in the range from 33.5 to 49.0%
for peak 2 in the range from 3.4 to 9.0%
for peak 3 in the range from 14.1 to 19.0%
for peak 4 in the range from 11.0 to 22.7%
for peak 5 in the range from 5.1 to 7.7%
for peak 6 in the range from 8.0 to 15.7%
for peak 7 in the range from 1.0 to 5.4%,
where the sum of the GC area percentages of peaks 1 to 7, based on the amount of 2,4- and 2,6-diamino-1-methylcyclohexane used, adds up to 100%.

5. The composition according to claim 4, wherein the hydrogenation has been performed in solution at mean temperatures in the range from 210 to 239°C and the GC area percentages are
for peak 1 in the range from 33.5 to 45.9%
for peak 2 in the range from 3.4 to 5.6%
for peak 3 in the range from 14.1 to 16.1%
for peak 4 in the range from 16.9 to 22.7%
for peak 5 in the range from 6.6 to 7.7%
for peak 6 in the range from 12.1 to 15.7%
for peak 7 in the range from 2.5 to 5.4%,
where the sum of the GC area percentages of peaks 1 to 7, based on the amount of 2,4- and 2,6-diamino-1-methylcyclohexane used, adds up to 100%.

6. The composition according to claim 4, wherein the hydrogenation has been performed in the melt at mean temperatures in the range from 210 to 239°C and the GC area percentages are
for peak 1 in the range from 38.5 to 46.0%
for peak 2 in the range from 4.7 to 8.7%
for peak 3 in the range from 14.8 to 19.0%
for peak 4 in the range from 12.1 to 17.9%
for peak 5 in the range from 5.5 to 7.1%
for peak 6 in the range from 8.7 to 13.2%
for peak 7 in the range from 1.4 to 3.2%,
where the sum of the GC area percentages of peaks 1 to 7, based on the amount of 2,4- and 2,6-diamino-1-methylcyclohexane used, adds up to 100%.

7. The composition according to claim 4, wherein the hydrogenation is performed in the melt at mean temperatures of ≥ 240°C and the GC area percentages are
for peak 1 in the range from 46.0 to 49.0%
for peak 2 in the range from 5.7 to 9.0%
for peak 3 in the range from 16.2 to 19.0%
for peak 4 in the range from 11.0 to 16.8%
for peak 5 in the range from 5.1 to 6.5%
for peak 6 in the range from 8.0 to 12.0%
for peak 7 in the range from 1.0 to 2.4%,
where the sum of the GC area percentages of peaks 1 to 7, based on the amount of 2,4- and 2,6-diamino-1-methylcyclohexane used, adds up to 100%.

8. The composition according to any of claims 1 to 3, wherein the hydrogenation is performed in solution at mean temperatures in the range from 170 to 209°C and the GC area percentages are
for peak 1 in the range from 22.4 to 33.4%
for peak 2 in the range from 1.7 to 3.3%
for peak 3 in the range from 12.9 to 14.0%
for peak 4 in the range from 22.8 to 25.0%
for peak 5 in the range from 6.6 to 7.7%
for peak 6 in the range from 15.8 to 26.3%
for peak 7 in the range from 2.5 to 5.4%,
where the sum of the GC area percentages of peaks 1 to 7, based on the amount of 2,4- and 2,6-diamino-1-methylcyclohexane used, adds up to 100%.

9. The composition according to any of claims 1 to 3, wherein the hydrogenation is performed in solution at mean temperatures in the range from 150 to 169°C and the GC area percentages are
for peak 1 in the range from 8.0 to 22.3%
for peak 2 in the range from 0.3 to 1.6%
for peak 3 in the range from 11.5 to 12.8%
for peak 4 in the range from 27.9 to 30.0%
for peak 5 in the range from 3.0 to 5.0%
for peak 6 in the range from 26.4 to 36.8%
for peak 7 in the range from 5.5 to 8.4%,
where the sum of the GC area percentages of peaks 1 to 7, based on the amount of 2,4 and 2,6-diamino-l-methylcyclohexane used, adds up to 100%.

10. The composition according to any of claims 1 to 3, wherein the hydrogenation is performed in solution at mean temperatures in the range from 130 to 149°C and the GC area percentages are
for peak 1 in the range from 4.0 to 7.9%
for peak 2 in the range from 0.3 to 1.6%
for peak 3 in the range from 9.0 to 11.4%
for peak 4 in the range from 25.1 to 27.8%
for peak 5 in the range from 7.8 to 10.0%
for peak 6 in the range from 36.9 to 40.0%
for peak 7 in the range from 8.5 to 10.0%,
where the sum of the GC area percentages of peaks 1 to 7, based on the amount of 2,4 and 2,6-diamino-1-methylcyclohexane used, adds up to 100%.

11. The composition according to any of claims 1 to 3, wherein the hydrogenation is performed over a fixed bed catalyst at a maximum temperature of 155 to 175°C and the GC area percentages are
for peak 1 in the range from 21.0 to 25.0%
for peak 2 in the range from 1.0 to 3.0%
for peak 3 in the range from 11.0 to 16.0%
for peak 4 in the range from 23.0 to 29.0%
for peak 5 in the range from 5.0 to 8.5%
for peak 6 in the range from 20.0 to 25.0%
for peak 7 in the range from 4.0 to 7.0%,
where the sum of the GC area percentages of peaks 1 to 7, based on the amount of 2,4 and 2,6-diamino-1-methylcyclohexane used, adds up to 100%.

12. The composition according to any of claims 1 to 11, wherein the epoxy resin is selected from the group of glycide polyethers, glycide polyesters and glycide amines.

13. The composition according to any of claims 1 to 12, wherein the stoichiometric ratio of epoxy groups to reactive hydrogen on an amine group in the mixture is in the range from 0.7 to 1.2.

14. A process for preparing the composition according to any of claims 1 to 13, wherein the epoxy resin is mixed with the mixture at temperatures in the range from 0°C to 70°C.

15. The use of the composition according to any of claims 1 to 13 for producing hardened epoxy resins.

16. A hardened epoxy resin obtainable by hardening the composition according to any of claims 1 to 13.

17. A mixture comprising the 7 isomers of 2,4- and 2,6-diamino-1-methylcyclohexane in a ratio of 75 to 95% by weight of 2,4- to 5 to 25% by weight of 2,6-diamino-1-methylcyclohexane, wherein the GC area percentages of the 7 isomers, in order of ascending retention time, are determined by gas chromatography with a column of length 30 m, internal diameter 0.25 mm and film thickness 0.5 µm, which is operated with helium as the mobile phase and comprises 35% by weight of diphenyl and 65% by weight of dimethylpolysiloxane as the stationary phase, is operated at temperatures in the range from 100 to 250°C over the entire measurement, and a flame ionization detector which is operated at 280°C is used, by dissolving the mixture comprising 7 isomers, after distillation, in tetrahydrofuran, injecting the solution into the gas chromatograph with an injection temperature of 100°C, an inlet pressure of 1 bar and a heating rate of 1°C/min is established until a temperature of 120°C is attained, then the heating rate is switched to 5°C/min and maintained until the end temperature of 250°C, then the temperature of 250°C is held for 10 min, and the rate of the helium enriched with the mixture of 40 ml/min is established over the entire measurement and the measurement is conducted with a split ratio of 1 to 40, and are
for peak 1 in the range from 4.0 to 49.0%,
for peak 2 in the range from 0.3 to 9.0%,
for peak 3 in the range from 9.0 to 19.0%
for peak 4 in the range from 11.0 to 30.0%,
for peak 5 in the range from 3.0 to 10.0%
for peak 6 in the range from 8.0 to 40.0 % and
for peak 7 in the range from 1.0 to 10.0%, where the sum of the GC area percentages based on the amount of 2,4- and 2,6-diamino-1-methylcyclohexane used adds up to 100%, and
a mixture comprising the 7 isomers of 2,4- and 2,6-diamino-1-methylcyclohexane in a ratio of 75 to 95% by weight of 2,4- to 5 to 25% by weight of 2,6-diamino-1-methylcyclohexane, the GC area percentages of which, in order of ascending retention time, determined by the same gas chromatography method, are
for peak 1 in the range from 15.6 to 16.6%,
for peak 2 in the range from 0.1 to 0.4%,
for peak 3 in the range from 32.2 to 33.2%
for peak 4 in the range from 23.5 to 24.5%
for peak 5 in the range from 4.1 to 5.1%
for peak 6 in the range from 18.1 to 19.1% and
for peak 7 in the range from 2.6 to 3.6%, where the sum of the GC area percentages of peaks 1 to 7, based on the amount of 2,4- and 2,6-diamino-1-methylcyclohexane used, adds up to 100%, is excluded.

18. The mixture according to claim 17, wherein the 7 isomers of 2,4- and 2,6-diamino-1-methylcyclohexane are obtainable by hydrogenating a mixture comprising 75 to 85% by weight of 2,4-toluenediamine and 15 to 25% by weight of 2,6-toluenediamine by means of an aluminum oxide-supported ruthenium-comprising catalyst at temperatures in the range from 130 to ≥ 240°C.

19. The use of the mixture according to either of claims 17 and 18 for producing a composition according to any of claims 1 to 13.

## Revendications

1. Composition contenant
a) au moins une résine époxyde et
b) un mélange contenant les 7 isomères du 2,4-diamino-1-méthylcyclohexane et du 2,6-diamino-1-méthylcyclohexane dans un rapport de 75 à 95% en poids de 2,4-diamino-1-méthylcyclohexane à 5 jusqu'à 25% en poids de 2,6-diamino-1-méthylcyclohexane, **caractérisé**
**en ce que** les pourcentages en surface par chromatographie en phase gazeuse des 7 isomères, classés en fonction des temps de rétention croissants, sont déterminés par chromatographie en phase gazeuse avec une colonne longue de 30 m, présentant un diamètre interne de 0,25 mm et contenant une épaisseur de film de 0,5 µm, qui est exploitée avec, comme phase mobile, de l'hélium et qui contient, comme phase stationnaire, 35% en poids de diphényle et 65% en poids de diméthylpolysiloxane, est exploitée à des températures dans la plage de 100 à 250°C pendant toute la mesure et en utilisant un détecteur par ionisation de flamme, qui est exploité à 280°C, le mélange contenant les 7 isomères étant dissous après distillation dans du tétrahydrofuranne, la solution étant injectée dans le chromatographe en phase gazeuse à une température d'injection de 100°C, une pression à l'entrée de 1 bar et en réglant une vitesse de chauffage de 1°C/min jusqu'à atteindre une température de 120°C, puis en modifiant la vitesse de chauffage à 5°C/min et en maintenant celle-ci jusqu'à la température finale de 250°C, puis en maintenant la température de 250°C pendant 10 min et en réglant pendant toute la mesure le débit de l'hélium enrichi en mélange à 40 ml/min et la mesure étant exploitée à un rapport de division de 1:40, et se situent pour le pic 1 dans la plage de 4,0 à 49,0%,
pour le pic 2 dans la plage de 0,3 à 9,0%,
pour le pic 3 dans la plage de 9,0 à 19,0%,
pour le pic 4 dans la plage de 11,0 à 30,0%,
pour le pic 5 dans la plage de 3,0 à 10,0%,
pour le pic 6 dans la plage de 8,0 à 40,0%, et pour le pic 7 dans la plage de 1,0 à 10,0%, la somme des pourcentages en surface par chromatographie en phase gazeuse, par rapport à la quantité utilisée de 2,4-diaminométhylcyclohexane et de 2,6-diaminométhylcyclohexane valant 100% et avec l'exclusion d'un mélange, contenant les 7 isomères du 2,4-diamino-1-méthylcyclohexane et du 2,6-diamino-1-méthylcyclohexane dans un rapport de 75 à 95% en poids de 2,4-diamino-1-méthylcyclohexane à 5 jusqu'à 25% en poids de 2,6-diamino-1-méthylcyclohexane, dont les pourcentages en surface par chromatographie en phase gazeuse, classés en fonction des temps de rétention croissants, déterminés selon le même procédé de chromatographie en phase gazeuse, se situent pour le pic 1 dans la plage de 15,6 à 16,6%,
pour le pic 2 dans la plage de 0,1 à 0,4%,
pour le pic 3 dans la plage de 32,2 à 33,2%,
pour le pic 4 dans la plage de 23,5 à 24,5%,
pour le pic 5 dans la plage de 4,1 à 5,1%,
pour le pic 6 dans la plage de 18,1 à 19,1%, et pour le pic 7 dans la plage de 2,6 à 3,6%, la somme des pourcentages en surface par chromatographie en phase gazeuse des pics 1 à 7, par rapport à la quantité utilisée de 2,4-diaminométhylcyclohexane et de 2,6-diaminométhylcyclohexane valant 100%.

2. Composition selon la revendication 1, **caractérisée en ce que** les 7 isomères du 2,4-diamino-1-méthylcyclohexane et du 2,6-diamino-1-méthylcyclohexane peuvent être obtenus par hydrogénation d'un mélange contenant 75 à 85 % en poids de 2,4-toluènediamine et 15 à 25 % en poids de 2,6-toluènediamine.

3. Composition selon l'une quelconque des revendications 1 à 2, **caractérisée en ce que** l'hydrogénation est réalisée à l'aide d'un catalyseur contenant du ruthénium.

4. Composition selon l'une quelconque des revendications 1 à 3, **caractérisée en ce que** l'hydrogénation a été réalisée en solution ou en masse fondue à des températures moyennes dans la plage zu 210°C et les pourcentages en surface par chromatographie en phase gazeuse se situent
pour le pic 1 dans la plage de 33,5 à 49,0%,
pour le pic 2 dans la plage de 3,4 à 9,0%,
pour le pic 3 dans la plage de 14,1 à 19,0%,
pour le pic 4 dans la plage de 11,0 à 22,7%,
pour le pic 5 dans la plage de 5,1 à 7,7%,
pour le pic 6 dans la plage de 8,0 à 15,7%,
pour le pic 7 dans la plage de 1,0 à 5,4%,
la somme des pourcentages en surface par chromatographie en phase gazeuse des pics 1 à 7 par rapport à la quantité utilisée de 2,4-diamino-1-méthylcyclohexane et de 2,6-diamino-1-méthylcyclohexane valant 100%.

5. Composition selon la revendication 4, **caractérisée en ce que** l'hydrogénation a été réalisée en solution à des températures moyennes dans la plage de 210 à 239°C et les pourcentages en surface par chromatographie en phase gazeuse se situent
pour le pic 1 dans la plage de 33,5 à 45,9%,
pour le pic 2 dans la plage de 3,4 à 5,6%,
pour le pic 3 dans la plage de 14,1 à 16,1%,
pour le pic 4 dans la plage de 16,9 à 22,7%,
pour le pic 5 dans la plage de 6,6 à 7,7%,
pour le pic 6 dans la plage de 12,1 à 15,7%,
pour le pic 7 dans la plage de 2,5 à 5,4%,
la somme des pourcentages en surface par chromatographie en phase gazeuse des pics 1 à 7 par rapport à la quantité utilisée de 2,4-diamino-1-méthylcyclohexane et de 2,6-diamino-1-méthylcyclohexane valant 100%.

6. Composition selon la revendication 4, **caractérisée en ce que** l'hydrogénation a été réalisée en masse fondue à des températures moyennes dans la plage de 210 à 239°C et les pourcentages en surface par chromatographie en phase gazeuse se situent
pour le pic 1 dans la plage de 38,5 à 46,0%,
pour le pic 2 dans la plage de 4,7 à 8,7%,
pour le pic 3 dans la plage de 14,8 à 19,0%,
pour le pic 4 dans la plage de 12,1 à 17,9%,
pour le pic 5 dans la plage de 5,5 à 7,1%,
pour le pic 6 dans la plage de 8,7 à 13,2%,
pour le pic 7 dans la plage de 1,4 à 3,2%,
la somme des pourcentages en surface par chromatographie en phase gazeuse des pics 1 à 7 par rapport à la quantité utilisée de 2,4-diamino-1-méthylcyclohexane et de 2,6-diamino-1-méthylcyclohexane valant 100%.

7. Composition selon la revendication 4, **caractérisée en ce que** l'hydrogénation est réalisée en masse fondue à des températures moyennes ≥ 240°C et les pourcentages en surface par chromatographie en phase gazeuse se situent
pour le pic 1 dans la plage de 46,0 à 49,0%,
pour le pic 2 dans la plage de 5,7 à 9,0%,
pour le pic 3 dans la plage de 16,2 à 19,0%,
pour le pic 4 dans la plage de 11,0 à 16,8%,
pour le pic 5 dans la plage de 5,1 à 6,5%,
pour le pic 6 dans la plage de 8,0 à 12,0%,
pour le pic 7 dans la plage de 1,0 à 2,4%,
la somme des pourcentages en surface par chromatographie en phase gazeuse des pics 1 à 7 par rapport à la quantité utilisée de 2,4-diamino-1-méthylcyclohexane et de 2,6-diamino-1-méthylcyclohexane valant 100%.

8. Composition selon l'une quelconque des revendications 1 à 3, **caractérisée en ce que** l'hydrogénation est réalisée en solution à des températures moyennes dans la plage de 170 à 209°C et les pourcentages en surface par chromatographie en phase gazeuse se situent
pour le pic 1 dans la plage de 22,4 à 33,4%,
pour le pic 2 dans la plage de 1,7 à 3,3%,
pour le pic 3 dans la plage de 12,9 à 14,0%,
pour le pic 4 dans la plage de 22,8 à 25,0%,
pour le pic 5 dans la plage de 6,6 à 7,7%,
pour le pic 6 dans la plage de 15,8 à 26,3%,
pour le pic 7 dans la plage de 2,5 à 5,4%,
la somme des pourcentages en surface par chromatographie en phase gazeuse des pics 1 à 7 par rapport à la quantité utilisée de 2,4-diamino-1-méthylcyclohexane et de 2,6-diamino-1-méthylcyclohexane valant 100%.

9. Composition selon l'une quelconque des revendications 1 à 3, **caractérisée en ce que** l'hydrogénation est réalisée en solution à des températures moyennes dans la plage de 150 à 169°C et les pourcentages en surface par chromatographie en phase gazeuse se situent
pour le pic 1 dans la plage de 8,0 à 22,3%,
pour le pic 2 dans la plage de 0,3 à 1,6%,
pour le pic 3 dans la plage de 11,5 à 12,8%,
pour le pic 4 dans la plage de 27,9 à 30,0%,
pour le pic 5 dans la plage de 3,0 à 5,0%,
pour le pic 6 dans la plage de 26,4 à 36,8%,
pour le pic 7 dans la plage de 5,5 à 8,4%,
la somme des pourcentages en surface par chromatographie en phase gazeuse des pics 1 à 7 par rapport à la quantité utilisée de 2,4-diamino-1-méthylcyclohexane et de 2,6-diamino-1-méthylcyclohexane valant 100%.

10. Composition selon l'une quelconque des revendications 1 à 3, **caractérisée en ce que** l'hydrogénation est réalisée en solution à des températures moyennes dans la plage de 130 à 149°C et les pourcentages en surface par chromatographie en phase gazeuse se situent
pour le pic 1 dans la plage de 4,0 à 7,9%,
pour le pic 2 dans la plage de 0,3 à 1,6%,
pour le pic 3 dans la plage de 9,0 à 11,4%,
pour le pic 4 dans la plage de 25,1 à 27,8%,
pour le pic 5 dans la plage de 7,8 à 10,0%,
pour le pic 6 dans la plage de 36,9 à 40,0%,
pour le pic 7 dans la plage de 8,5 à 10,0%,
la somme des pourcentages en surface par chromatographie en phase gazeuse des pics 1 à 7 par rapport à la quantité utilisée de 2,4-diamino-1-méthylcyclohexane et de 2,6-diamino-1-méthylcyclohexane valant 100%.

11. Composition selon l'une quelconque des revendications 1 à 3, **caractérisée en ce que** l'hydrogénation est réalisée sur un catalyseur en lit fixe à une température maximale de 155 à 175°C et les pourcentages en surface par chromatographie en phase gazeuse se situent
pour le pic 1 dans la plage de 21,0 à 25,0%,
pour le pic 2 dans la plage de 1,0 à 3,0%,
pour le pic 3 dans la plage de 11,0 à 16,0%,
pour le pic 4 dans la plage de 23,0 à 29,0%,
pour le pic 5 dans la plage de 5,0 à 8,5%,
pour le pic 6 dans la plage de 20,0 à 25,0%,
pour le pic 7 dans la plage de 4,0 à 7,0%,
la somme des pourcentages en surface par chromatographie en phase gazeuse des pics 1 à 7 par rapport à la quantité utilisée de 2,4-diamino-1-méthylcyclohexane et de 2,6-diamino-1-méthylcyclohexane valant 100%.

12. Composition selon l'une quelconque des revendications 1 à 11, **caractérisée en ce que** la résine époxyde est choisie dans le groupe formé par les glycidyl-polyéthers, les glycidyl-polyesters et les glycidylamines.

13. Composition selon l'une quelconque des revendications 1 à 12, le rapport stoechiométrique des groupes époxyde à hydrogène réactif sur un groupe amine du mélange se situant dans la plage de 0,7 à 1,2.

14. Procédé pour la préparation de la composition selon l'une quelconque des revendications 1 à 13, **caractérisé en ce que** la résine époxyde est mélangée avec le mélange à des températures dans la plage de 0°C à 70°C.

15. Utilisation de la composition selon l'une quelconque des revendications 1 à 13 pour la préparation de résines époxyde durcies.

16. Résine époxyde durcie pouvant être obtenue par durcissement de la composition selon l'une quelconque des revendications 1 à 13.

17. Mélange contenant les 7 isomères du 2,4-diamino-1-méthylcyclohexane et du 2,6-diamino-1-méthylcyclohexane dans un rapport de 75 à 95% en poids de 2,4-diamino-1-méthylcyclohexane à 5 jusqu'à 25% en poids de 2,6-diamino-1-méthylcyclohexane, **caractérisé en ce que** les pourcentages en surface par chromatographie en phase gazeuse des 7 isomères, classés en fonction des temps de rétention croissants, sont déterminés par chromatographie en phase gazeuse avec une colonne longue de 30 m, présentant un diamètre interne de 0,25 mm et contenant une épaisseur de film de 0,5 µm, qui est exploitée avec, comme phase mobile, de l'hélium et qui contient, comme phase stationnaire, 35% en poids de diphényle et 65% en poids de diméthylpolysiloxane, est exploitée à des températures dans la plage de 100 à 250°C pendant toute la mesure et en utilisant un détecteur par ionisation de flamme, qui est exploité à 280°C, le mélange contenant les 7 isomères étant dissous après distillation dans du tétrahydrofuranne, la solution étant injectée dans le chromatographe en phase gazeuse à une température d'injection de 100°C, une pression à l'entrée de 1 bar et en réglant une vitesse de chauffage de 1°C/min jusqu'à une température de 120°C, puis en modifiant la vitesse de chauffage à 5°C/min et en maintenant celle-ci jusqu'à atteindre la température finale de 250°C, puis en maintenant la température de 250°C pendant 10 min et en réglant pendant toute la mesure le débit de l'hélium enrichi en mélange à 40 ml/min et la mesure étant exploitée à un rapport de division de 1:40, et se situent
pour le pic 1 dans la plage de 4,0 à 49,0%,
pour le pic 2 dans la plage de 0,3 à 9,0%,
pour le pic 3 dans la plage de 9,0 à 19,0%,
pour le pic 4 dans la plage de 11,0 à 30,0%,
pour le pic 5 dans la plage de 3,0 à 10,0%,
pour le pic 6 dans la plage de 8,0 à 40,0%,
pour le pic 7 dans la plage de 1,0 à 10,0%, la somme des pourcentages en surface par chromatographie en phase gazeuse, par rapport à la quantité utilisée de 2,4-diamino-1-méthylcyclohexane et de 2,6-diamino-1-méthylcyclohexane valant 100% et
avec exclusion d'un mélange, contenant les 7 isomères du 2,4-diamino-1-méthylcyclohexane et du 2,6-diamino-1-méthylcyclohexane dans un rapport de 75 à 95% en poids de 2,4-diamino-1-méthylcyclohexane à 5 jusqu'à 25% en poids de 2,6-diamino-1-méthylcyclohexane, dont les pourcentages en surface par chromatographie en phase gazeuse, classés en fonction des temps de rétention croissants, déterminés selon le même procédé de chromatographie en phase gazeuse, se situent pour le pic 1 dans la plage de 15,6 à 16,6%,
pour le pic 2 dans la plage de 0,1 à 0,4%,
pour le pic 3 dans la plage de 32,2 à 33,2%,
pour le pic 4 dans la plage de 23,5 à 24,5%,
pour le pic 5 dans la plage de 4,1 à 5,1%,
pour le pic 6 dans la plage de 18,1 à 19,1%, et pour le pic 7 dans la plage de 2,6 à 3,6%, la somme des pourcentages en surface par chromatographie en phase gazeuse des pics 1 à 7, par rapport à la quantité utilisée de 2,4-diamino-1-méthylcyclohexane et de 2,6-diamino-1-méthylcyclohexane valant 100%.

18. Mélange selon la revendication 17, **caractérisé en ce que** les 7 isomères du 2,4-diamino-1-méthylcyclohexane et du 2, 6-diamino-1-méthylcyclohexane peuvent être obtenus par hydrogénation d'un mélange contenant 75 à 85 % en poids de 2,4-toluènediamine et 15 à 25 % en poids de 2,6-toluènediamine au moyen d'un catalyseur contenant du ruthénium supporté sur de l'oxyde d'aluminium à des températures dans la plage de 130 à ≥ 240°C.

19. Utilisation du mélange selon l'une quelconque des revendications 17 à 18 pour la préparation d'une composition selon l'une quelconque des revendications 1 à 13.
